# EUROPEAN PATENT APPLICATION

(11) **EP 0 928 820 A2**
(43) Date of publication of application: **14.07.1999**
(21) Application number: 98310471.2
(22) Date of filing: 18.12.1998
(51) Int. Cl.: C09D 7/12, C09D 5/02, C07C 49/12

(54) **Wet adhesion promoter**

(30) Priority: 06.01.1998 US 70582 P
(71) Applicant: CYTEC TECHNOLOGY CORP., Wilmington, Delaware 19801 (US)
(72) Inventor: Singh, Balwant, Stamford, Connecticut 06903 (US)
(74) Representative: Bowman, Paul Alan

(57) **Abstract**

Compositions containing urea functional compounds are disclosed which are particularly suitable for use as post-added wet adhesion promoters in coatings, especially in aqueous emulsion systems used to make latex paints. A process of preparing the same is also disclosed, as well as a novel class of compounds.

## Description

### BACKGROUND OF THE INVENTION

### Field of the Invention

This invention relates to compositions comprising blends of a latex polymer and various compounds which function as post-add wet adhesion promoters. More specifically, the compounds promote adhesion in polymers and copolymers, and especially in aqueous emulsion copolymer latexes which are used to prepare latex paints when post-added to said latexes from which the paints are made or to the paints per se. The invention also relates to a process for preparing said compositions, various compounds per se and a process for imparting wet adhesion to latexes and paints made therefrom.

### Description of Related Art

The term "wet adhesion" is used in the paint industry to describe the ability of a paint to retain its adhesive bond to a substrate under wet or high humidity conditions. While oil-based systems are known to retain their adhesive properties under wet or humid conditions, the tendency of many water-based coatings (i.e., latexes) to lose their adhesive properties when wet has limited the usefulness of such coatings. The wet adhesion deficiency of latex paints also makes surfaces painted with such paints less scrub resistant than those surfaces painted with organic solvent-based paints.

Since the use of water-based emulsion polymer systems as protective and decorative coatings for many types of surfaces has become widespread, such systems being used by individuals in homes and in industry, there is a great need for improved wet adhesion thereof. In recent years, the art has recognized the problem of loss of adhesive properties in latex paints and a variety of modifications of such latex systems to improve wet adhesion have been proposed. Chemical incorporation of amine, amide and acetoacetate functionalities into latex polymers has been reported to improve the wet adhesion properties of latex paints. For example, a number of cyclic ureido compounds have been described in United States Patents 2,727,016; 2,980,652, 3,194,792; 3,369,008; 3,719,646; 4,766,221 4,104,220; 4,111,877; 4,219,454; 4,319,032;4,599,417; 4,777,417 as well as Ger. Nos. 2,535,372 and 2,535,373, and WO 91/12243 as imparting wet adhesion properties, which patents are herein incorporated by reference for all purposes as if fully set forth. In addition, various latex paints and emulsions which contain ureido-functionality due to copolymerized monomers for imparting wet adhesion are generally described, for example, in United States Patents 3,369,008; 3,366,613; 2,920,950; 2,881,171; 2,727,019; 3,509,085; 2,980,652; 3,935,151 3,356,654; 4,219,454 and Eur. Pat. Appln. 22548, all of which are also incorporated by reference for all purposes as if fully set forth. However, the wet adhesion monomers employed in the above-described art have the disadvantage that they are very expensive and their chemical inclusion into latex polymers results in a substantial increase in the cost of the vinyl, vinyl-acrylic and all-acrylic polymers used in latex-based paints.

It has now been discovered that excellent wet adhesion properties can be imparted into aqueous emulsion systems used to make latex paints by post-adding into the emulsion system or the latex paint per se, a class of compounds, specifically, acrylated maleurates, acrylated fumaurates, acrylated succinurates, acrylated citraconurates, acrylated itaconurates, the related vinylether, vinylester, and cyclic urea derivatives of hydroxyalkylalkyleneureas, aminoalkylalkyleneureas, and their Diels-Alder adducts with 1,3-dienes. It has also been discovered that the bismaleate, bisfumarate, bismaleamide, and bisfumaramide derivatives of hydroxyalkylalkyleneureas and aminoalkylalkyleneureas together with their Diels-Alder adducts with 1,3-dienes are also effective as adhesion/wet-adhesion promoters when post-added to such latex emulsions or to paints made from such emulsions.

Latex-containing surface coatings and coating compositions having superior wet adhesion properties may therefore be produced by post-adding to the system, one or a mixture of the above-specified compounds. In particular, the post-added compounds have been found to be especially useful in water-based latex-containing paints.

It has also been discovered that wet adhesion properties can be imparted to aqueous emulsion copolymer latexes by post-adding to such latexes, maleuric acid, fumauric acid, itaconuric acid and citraconuric acid and their alkyl esters, as well as allyl maleurate.

### SUMMARY OF THE INVENTION

As indicated above, the present invention is directed to novel latex compositions comprising a blend of a latex polymer and a compound represented by the following general Formula (I) 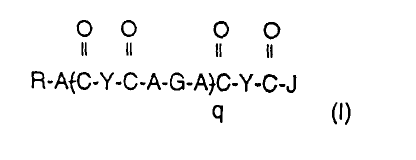 wherein A is 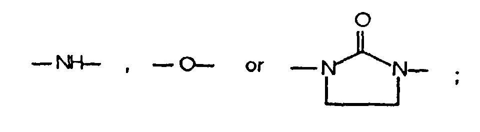 wherein G is an aliphatic or alicyclic moiety of 1-12 carbon atoms, inclusive, or an alkylene oxide or polyalkyleneoxide moiety of 2-6 carbon atoms, inclusive, wherein Y is a C₁ to C₁₂ aliphatic or alicyclic, C₆-C₁₅ aromatic, alkylaromatic, hydroaromatic or haloaromatic moiety, 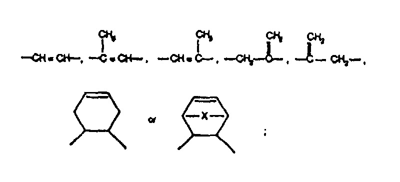 wherein X is ― CH₂ ― or ― O ― ;
wherein R is 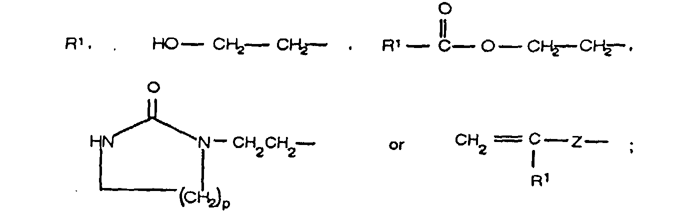 wherein Z is CH₂, 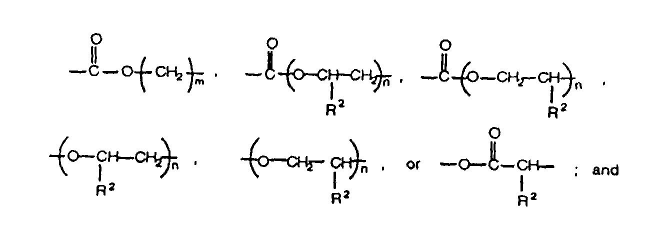 wherein J is NHCONHR², 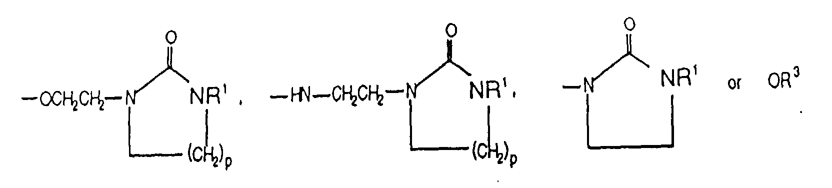 wherein R¹, R ² or R³ is, individually, hydrogen or a C₁-C₄ alkyl, n is an integer of from 1 to 5, inclusive, p is 1 or 2, m is ≥ 2, and q is an integer of from 0-15, inclusive, preferably 1-15, inclusive, most preferably 1-6, inclusive.
It is within the scope of the invention to use mixtures of the compounds of Formula (I) in aqueous latex polymer systems, especially those used in forming coatings, e.g., paints.

Accordingly, the invention includes latex polymer compositions comprising the compounds of Formula (I) of the present invention, and, especially, acrylic, vinyl, vinyl-acrylic, and styrene-acrylic latex paints thereof.

In addition, the present invention provides a method of enhancing the adhesion/wet adhesion of aqueous polymer systems by post-adding the compounds of the above Formula thereto.

The invention further provides maleuric acid, fumauric acid, citraconuric acid, itaconuric acid and their alkyl esters, etc., together with allyl maleurate as useful post-additives for imparting adhesion/wet adhesion properties to water-based paint and coating compositions. Thus, the invention is also directed to latex compositions comprising post-added maleuric acid, fumauric acid, citraconuric acid, itaconuric acid as well as alkyl maleurates, alkyl fumaurates, alkyl citraconurates, alkyl itaconurates, and allyl maleurate, etc., as adhesion/wet adhesion promoters.

The compounds of Formula (I) wherein q is 1-15 are new and novel and form an added feature of this invention.

These and other features and advantages of the present invention will be more readily understood by those skilled in the relevant art from a reading of the following detailed description.

### DETAILED DESCRIPTION OF THE PREFERRED EMBODIMENTS

As indicated above, the present invention relates most broadly to compositions comprising a blend of a latex polymer and a compound of the general Formula (I) shown above. Several of the compounds are characterized by the fact that the noncyclic urea nitrogens in the compounds are attached directly to a carbonyl (C=O) group rendering these materials much more polar than the prior art ureido compounds. The presence of the non-cyclic ureas adjacent to the carbonyl groups additionally alters the reactivity profile of these compounds. The cyclic urea derivatives used in the compositions and process of the present invention either contain two cyclic urea functionalities or a combination of cyclic urea and activated non-cyclic urea functionalities.

### Preparation of the Compounds

The compounds of the Formula (I) indicated above may be derived from such known compounds as N-carbamylmaleimide (NCMl), N-carbamylsuccinimide (NCSl), N-carbamylcitraconimide (NCCl), N-carbamylitaconimide (NCll), tetrahydrophthalic anhydride (THPA), N-carbamyltetrahydrophthalimide (NC-THPl), endo/exo-norbornene dicarboxylic anhydride (nadicanhydride, NDA), N-carbamyl-endo/exo-norbornene dicarboximide (NC-NDl), endo/exo-3,6-epoxy-1,2,3,4-tetrahydrophthalic anhydride (ETHPA) and N-carbamyl-endo/exo-3,6-epoxy-tetrahydrophthalimide (NC-ETHPl), which compounds have the Formulae indicated below: 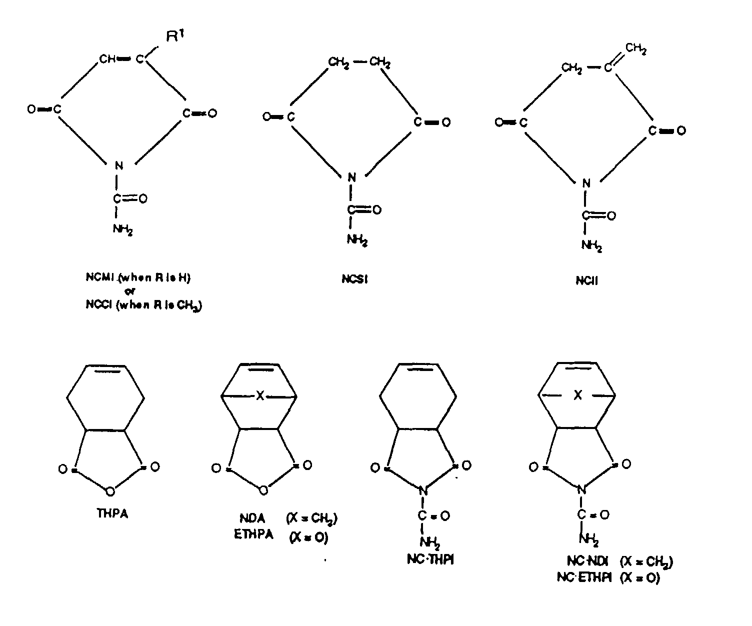 Suitable precursors also include maleic, citraconic, itaconic, nadic, endo/exo-3,6-epoxy tetrahydrophthalic anhyrides, fumaric acid, malic acid, tartaric acid, succinic acid, glutaric acid, adipic acid, 1,2,3,4-butane tetracarboxylic acid as well as their corresponding amic acids, monoesters, diesters, tri and tetraesters, mono and polyfunctional amides and halogenated derivatives thereof. Suitable precursors also include the bridged mono, bis and oligomeric esters and amides derived from the above di and polyfunctional carboxylic acids and diols, aminoalcohols, diamines, triamines and the like. Suitable diols, amino alcohols and diamines include ethylene glycol, propylene glycol, butane diols, polyethylene glycol, polypropylene glycol, polyethylene propylene glycols, ethanol amine, diethanol amine, triethanol amine, 4-amino-1-butanol, 2-amino-1-butanol, 1-amino-2-butanol, ethylene diamine, propylene diamine, 1,4-diamino butane, hexamethylene diamine, toluene diamine (TDA), 4,4'-diamino-diphenyl methane, 4,4'-diamino dicyclohexyl methane and the like.

As representative examples of the compounds useful in the present invention, the following may be mentioned:

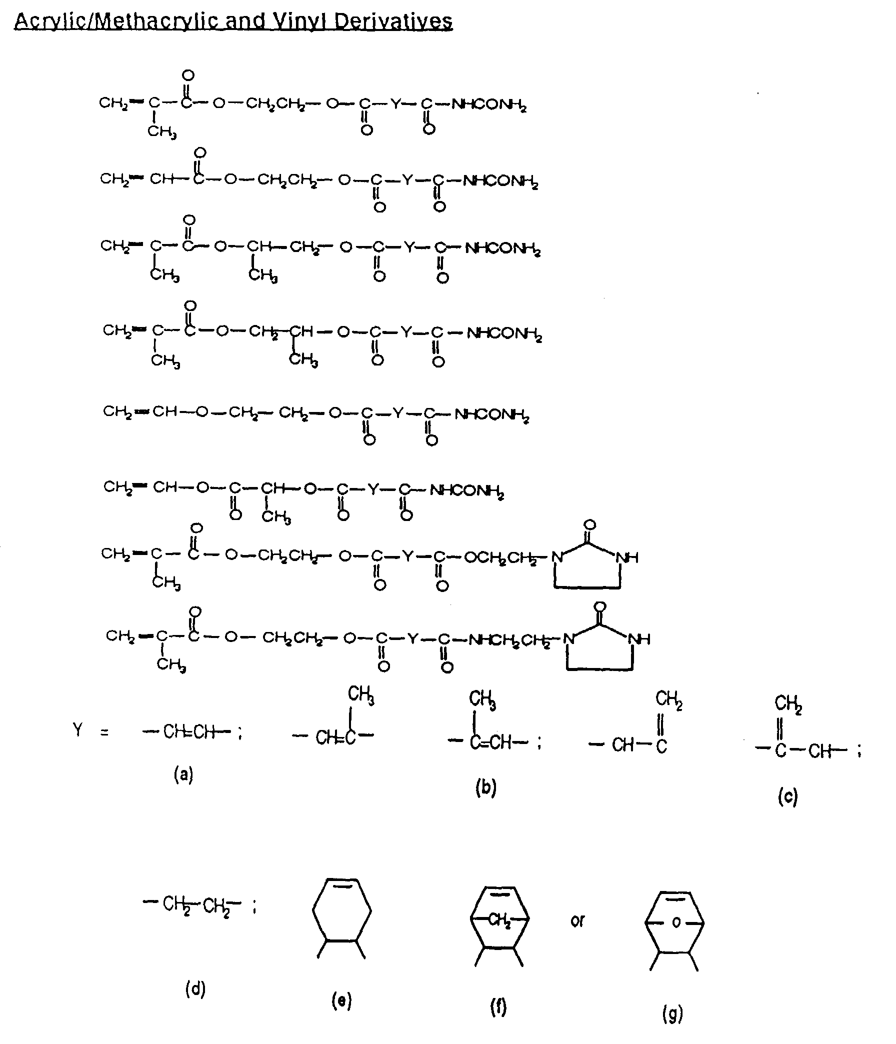

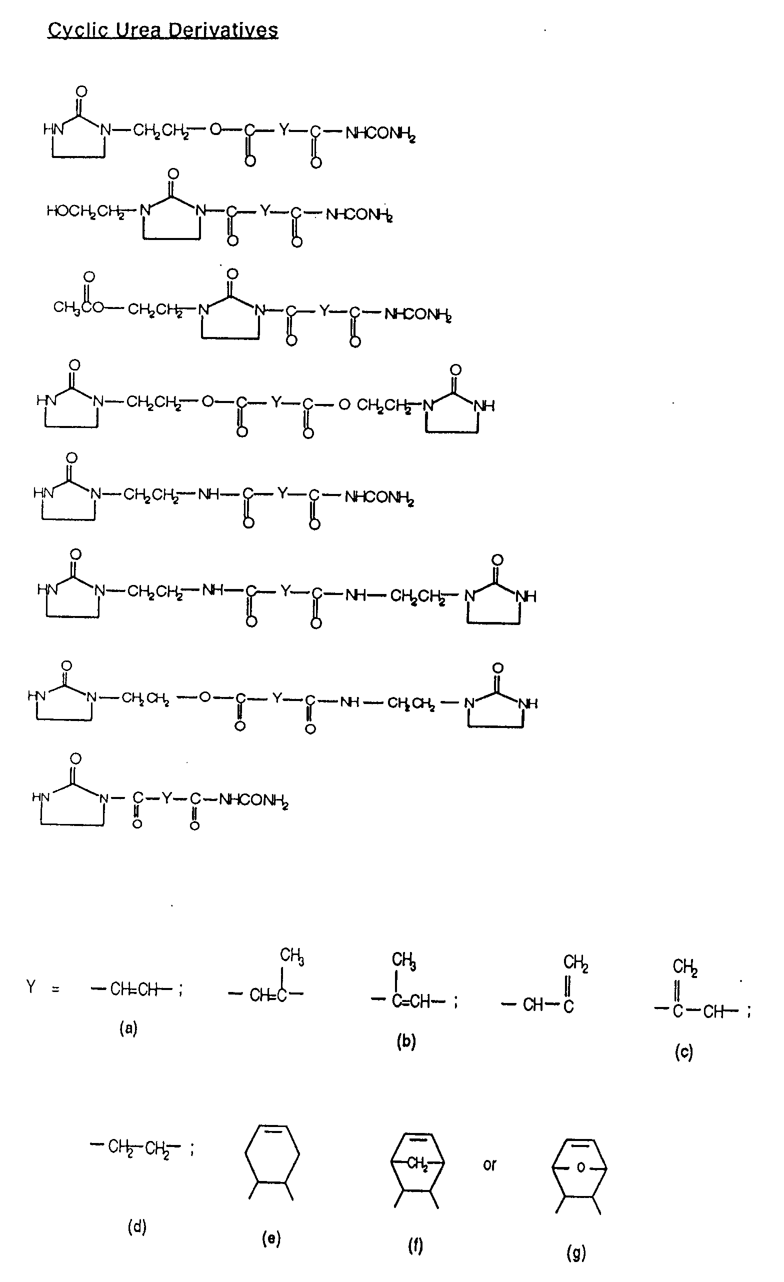

The maleurate, succinurate, citraconurate and itaconurate compounds are prepared by reacting NCMl, NCSl, NCCl, NCll, NC-THPl, NC-NDl or NC-ETHPl with hydroxyfunctional or aminofunctional compounds. For example, the acrylated monomers are prepared by reacting NCMl, NCSl, NCCl, NCll, NC-THPl, NC-NDl or NC-ETHPl with hydroxyalkyl acrylates or methacrylates in essentially stoichiometric quantities at a temperature ranging from about 20°C to 150°C. Preferably, the temperature ranges from about 25°C to about 100°C. Examples of suitable hydroxyalkyl acrylates and methacrylates include 2-hydroxyethyl acrylate, 2-hydroxyethyl methacrylate, 2-hydroxypropyl acrylate, 2-hydroxypropyl methacrylate and ethoxylated and propoxylated acrylic and methacrylic acid, and the like.

In order to lower the viscosity of the reaction mixture, a non-reactive solvent may be employed. Examples of suitable non-reactive solvents include acetonitrile, acetone, methyl ethyl ketone, dioxane, tetrahydrofuran, ethylene glycol dimethyl ether, dimethyl formamide, dimethyl acetamide, dimethyl sulfoxide, aromatic hydrocarbons such as toluene and xylene, tertiary alcohols such as t-butanol, carboxylic acids such as acetic acid, proprionic acid, and the like.

The reaction may optionally be carried out in the presence of comonomers such as methyl methacrylate, methacrylic acid, styrene and mixtures thereof. These optional comonomers do not enter into the above-described reaction and their sole function is to allow the final product, that is the novel acrylated maleurate compound, to exist in solution form.

A catalyst is not necessary for the reaction but if desired, a catalyst may be added to accelerate the reaction. Suitable catalysts include ZnCl₂, Zn(OCOCH₃)₂, FeCl₃, cobalt acetate, chelates of transition metal ions with α,β-diketones and ketoesters, tin salts such as SnCl₂, SnCl₄, SnO₂ and tin based urethane catalysts such as dibutyltin dilaurate, tetrabutyldiacetoxystannoxane, dimethyltin dilaurate, stannous octoate and dibutyltin oxide. The preferred catalysts are the zinc and tin compounds. The amount of catalyst generally used is 0.1 to 5.0 mole percent based on NCMl, NCSl, NCCl, NCll, NC-THPl, NC-NDl or NC-ETHPl. Preferably, the range of catalyst used is from about 0.1 to 1.0 mole%.

To prevent polymerization of the reactants and/or the product, where possible, it is customary to use low levels of radical inhibitors. Examples of suitable inhibitors include hydroquinone, the methyl ether of hydroquinone, di-tert-butyl catechol, di-tert-butyl phenol, phenothiazene, etc. The total inhibitor concentration is typically in the range from about 100 to 2000 ppm. The preferred range of radical Inhibitor is from about 200 to 250 ppm. When a radical inhibitors is used, the preferred inhibitors are methyl ether of hydroquinone and hydroquinone.

The above-described reaction of NCMl, NCSl, NCCl, NCll, NC-THPl, NC-NDl or NC-ETHPl with hydroxyalkyl acrylates or methacrylates yields acrylated maleurate, succinurate, citraconurate, itaconurate and related compounds. If it is desired to prepare the acrylated compounds so that they are not in solution form as a final product, the optional co-monomers described above are not added, and the acrylated compounds are isolated by removal, under reduced pressure, of the non-hydroxylic (non-reactive) solvent (i.e., acetonitrile, acetone) used, if any, followed by aqueous washing of the acrylated maleurate product with water, followed by drying.

The cyclic urea derivatives of hydroethylethyleneurea, hydroxyethylpropyleneurea, aminoethylethyleneurea, aminoethylpropyleneurea, ethylene urea and propylene urea are prepared by reacting NCMl, NCSl, NCCl, NCll, NC-THPl, NC-NDl or NC-ETHPl with hydroxyethylethyleneurea, hydroxyethylpropyleneurea, aminoethylethyleneurea, aminoethylpropyleneurea, ethylene urea or propylene urea in essentially stoichiometric amounts. In the case of hydroxyethylethyleneurea and hydroxyethylpropyieneurea, the reaction with the various N-carbamyl imides can produce varying amounts of ring-opened products resulting from the attack of the ureido NH on the imide carbonyl. These products are also effective as post-added wet adhesion promoters. As in the case of the acrylic derivatives, the reaction is preferably carried out in the temperature range of 20°C to 150°C, more preferably in the range of 25°C to 100°C. The reaction with aminoethylethyleneurea is best carried out in the 20°-50°C range to avoid by-product formation. The reaction is preferably carried out in the presence of one or more of the solvents and catalysts disclosed above for the acrylated compounds.

The mono, bis and oligomeric ureido maleates, fumarates and amides are prepared by reacting dialkyl esters of maleic, fumaric, citraconic, itaconic, tetrahydrophthalic, nadic or 3,6-epoxytetrahydrophthalic, malonic, succinic, adipic, glutaric and tartaric acids with the appropriatie cyclic hydroxyalkylalkyleneureas or aminoalkylalkyleneureas in the presence of transesterification/amidation catalysts. Examples of suitable transesterification/amidation catalysts include the titanates such as tetra-i-propyltitanate (TYZOR® TPT) (titanium (IV) isoproxide) tetrabutyltitanate (TYZOR® TBT) (titanium (IV) butoxide), alkali and alkaline earth salts of β-ketoesters and β-diketones such as calcium and magnesium salts of acetoacetic acid, alkoxides of alkali and alkaline earth metals such as sodium, potassium, calcium and magnesium salts, tertiary amines and strong protonic acids such as H₂SO₄, HCl and p-toluene sulfonic acid, which may optionally be supported on inert supports. The reaction is preferably carried out in the temperature range of 110°C-160°C in the presence of tetra-i-propyltitanate (TYZOR® TPT) (titanium (IV) ispropoxide) or zinc salts such as zinc acetate as the catalysts, with the removal of volatile alcohols.

Suitable hydroxyalkylalkyleneureas and aminoalkylalkyleneureas include hydroxyethylethyleneurea, hydroxyethylpropyleneurea, aminoethylethyleneurea and aminoethylpropyleneurea. In the case of unsaturated diesters, depending on the reaction conditions and the catalyst employed, a mixture of cis and trans mono and bis, or predominantly bis, derivatives are usually obtained together with varying amounts of isomers and oligomers. A solvent is not necessary for the reaction, but if desired, nonreactive inert solvents such as toluene, xylene, and the like may be employed.

The bisureido maleates may also be prepared by reacting hydroxyethylethyleneurea with maleic anhydride followed by treatment with thionyl chloride and subsequent reaction with hydroxyethylethyleneurea. The bisureido fumarates and fumaramides may are obtained by reacting fumaryl chloride with an appropriate hydroxyethylethyleneurea or aminoethylethyleneurea. Monomeric and oligomeric products are produced.

The allyl and methallyl derivatives are prepared by reacting NCMl, NCSl, NCCl, NCll, NC-THPl, NC-NDl or NC-ETHPl with the corresponding allylic alcohols or amines under conditions described above for the acrylic and methacrylic derivatives. Examples of suitable allylic alcohols and amines include allyl alcohol, methallyl alcohol, allylamine, methallylamine, diallylamine and dimethallylamine.

The vinyl ether and vinyl ester derivatives are similarly prepared by reacting NCMl, NCSl, NCCl, NCll, NC-THPl, NC-NDl or NC-ETHPl with vinyl alcohols or vinyl ester alcohols. Examples of suitable vinyl alcohols include ethylene glycol monovinyl -ether, propylene glycol monovinyl ether, polyethylene glycol monovinyl ether and the like. Examples of suitable vinyl ester alcohols include vinyl esters of lactic acid and 3-hydroxypropionic acid.

The trans isomers of the compounds of this invention can also be prepared by isomerizing the corresponding cis isomers by heating in the presence of catalysts including, for example, hydrochloric acid, sulfuric acid, aluminum chloride and pyridine, preferably in a polar organic solvent such as acetonitrile, 1,2-dimethoxyethane, and the like.

A preferred method for preparing the maleurate compounds is a one-pot procedure, wherein urea and maleic anhydride are reacted in a non-reactive polar organic solvent including, for example, acetonitrile, methyl ethylketone, acetic acid and acetone. The preferable non-reactive polar organic solvents are acetonitrile and acetic acid, more preferably acetic acid. The reaction of urea and maleic anhydride in the non-reactive polar organic solvent, acetic acid, for example, is conducted at 50°-100°C, preferably 60°-80°C, to form the maleuric acid intermediate. The reaction is typically complete in about 4-10 hours depending on the reaction temperature employed. A dehydrating agent is then added to the reaction mixture which is heated at 50°-100°C, preferably 60°- 80°C, for another 2 to 4 hours to cyclize maleuric acid to NCMl. Suitable dehydrating agents include, for example, acetic anhydride, proprionic anhydride and butyric anhydride. The resulting solution of NCMl is then reacted in the same pot with an appropriate hydroxyl coreactant, such as hydroxyethyl methacrylate (HEMA), at the same temperature ranges indicated above to form the maleurate compounds as solutions in the non-reactive polar organic solvent (i.e., acetic acid). As disclosed hereinabove, the reaction of NCMl with an hydroxyl compound may be accelerated by incorporating into the reaction mixture suitable catalysts as, for example, zinc acetate. For the end use post-add application, the compounds may be used without isolation. However, if desired, the non-reactive solvent, i.e., acetic acid, may be removed under vacuum or the reaction mixture may be diluted with water to precipitate the compounds which can be dried and dissolved in other suitable solvents or monomers such as methyl methacrylate, methacrylic acid and/or acrylic acid. Alternatively, the compounds may be dissolved in aqueous methacrylic and/or acrylic acid.

The maleurate esters and amides of hydroxyethylethyleneurea (HEEU) and aminoethylethyleneurea (AEEU) can also be obtained by the same one-pot process described above. For example, following the reaction of urea and maleic anhydride, as above, the resulting solution of NCMl is then reacted in the same pot with HEEU or AEEU at the same temperature range of the one-pot procedure described above. The resulting reaction mixtures can contain varying amounts of isomeric products derived from ring opening of the imides with the ring NH of HEEU and AEEU, in addition to the usual trans isomers. These compounds are water soluble and thus cannot be precipitated by adding water to the non-reactive polar organic solvent (i.e., acetic acid) solution. Instead, they can be used in the solution of the non-reactive polar organic solvent (i.e., acetic acid) solution or the non-reactive polar organic solvent can be removed by vaccum stripping and the resulting compounds may be dissolved in water and/or methyacrylic acid and its mixtures with various monomers.

The succinurates, citraconurates, itaconurates and their corresponding amides, may similarly be prepared by the one-pot process described above using NCSl, NCCl, NCll, NC-THPl, NC-NDl or NC-ETHPl, respectively, instead of NCMl.

### Preparation of Maleuric, Fumauric, Succinuric.

### Citraconuric and Itaconuric Acids and Their Alkyl Esters

Maleuric, fumauric, succinuric, citraconuric and itaconuric acids can be prepared by known procedures as those, for example, described in U.S. Patents 2,717,908 and 2,788,349 which are herein incorporated by reference for all purposes as if fully set forth. By way of example, the aforesaid acids, can be prepared by reacting maleic anhydride, citraconic anhydride or itaconic anhydride with urea in a solvent such as acetic acid, formic acid or acetonitrile. The alkyl esters are prepared by reacting NCMl, NCSl, NCCl, NCll, NC-THPl, NC-NDl or NC-ETHPl with alcohols such as methanol, propanol, isopropanol, butanol, isobutanol, octanol, octadecanol, dodecanol, etc. under conditions and procedures well-known to those skilled in the art. The trans acids and their esters are prepared by isomerizing the cis-derivatives by heating in the presence of catalysts including pyridine and aluminum chloride and following procedures known to those of ordinary skill in the art.

The acrylic and vinyl maleurates, fumaurates, succinurates, citraconurates and itaconurates, their Diels-Alder adducts and the corresponding bisesters and bisamides of hydroxalkylalkylenenurea and aminoalkylalkylene-urea are represented by the general Formula (I), above. Preferred compounds are those represented by the structures below, wherein Y is cis or trans ―CH=CH―: 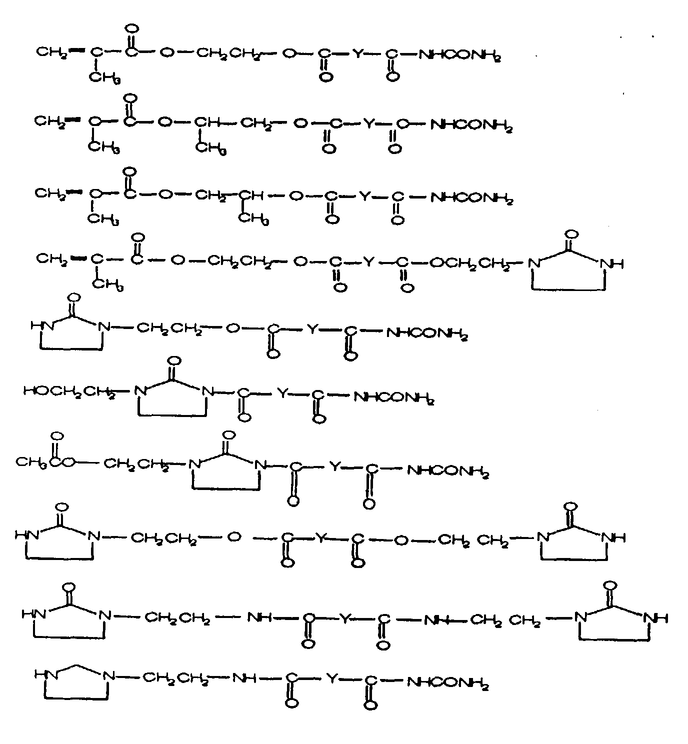 More preferred are compounds having the chemical structures shown below:

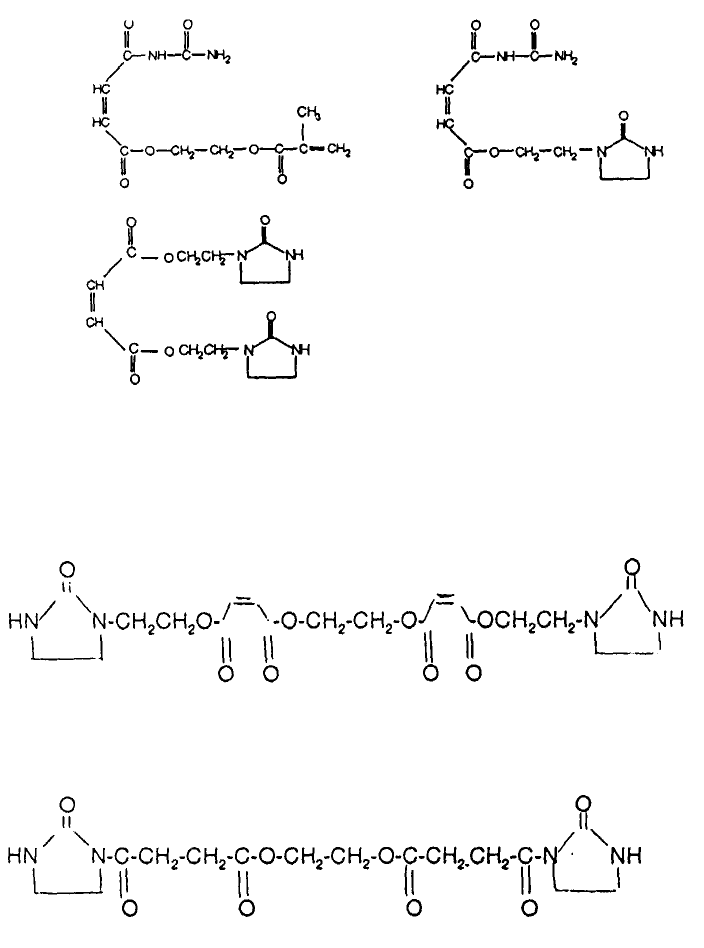

The compounds represented by Formula I, are used as post-add adhesion/wet adhesion promoters. Additionally, maleuric acid, fumauric acid, citraconuric acid and itaconuric acid and their alkyl esters together with allyl maleurate have been found to be post-add wet adhesion promoters. Thus, the post-addition of maleuric acid, fumauric acid, citraconuric acid and itaconuric acid, their alkyl esters, or ally maleurate into latex paint compositions to function as wet adhesion promoters is provided in the present invention. The alkyl maleuramides, fumauramides, citraconuramides and itaconuramides and the corresponding imides are also useful as post-add wet adhesion compounds.

The above-described compounds are useful as post-add wet adhesion promoters for various aqueous emulsion polymers, such as compositions comprising polymers produced from such monomers such as acrylics, vinyls, vinyl aromatics, α,β-unsaturated carboxylic acids and their esters, as well as other known specialty monomers. Examples of suitable acrylic monomers include methyl acrylate, ethyl acrylate, 2-ethylhexyl acrylate, methyl methacrylate, hydroxyalkyl acrylates, hydroxyalkyl methacrylates, butyl acrylate, hexyl acrylate, cyclohexyl acrylate, 2-hydroxyethyl methacrylate, 2-hydroxyethyl acrylate, 2-hydroxypropyl methacrylate, 2-hydroxypropyl acrylate, piperidinoethyl methacrylate, morpholinoethyl methacrylate, and the like.

Examples of suitable vinyl monomers include ethylene, propylene, butylene, isobutylene, hexene, vinyl acetate, vinyl esters of versatic acids (e.g., VEOVA-9 and VEOVA-10), vinyl chloride, acrylonitrile, acrylamide, methacrylamide, vinylidene chloride, oleic acid, linoleic acid, 1,3-butadiene, isoprene, norbornene, cyclopentadiene and the like.

Examples of useful unsaturated carboxylic acids include itaconic acid, citraconic acid, crotonic acid, mesaconic acid, maleic acid, fumaric acid, and the like; α,β-unsaturated dicarboxylic acid esters of the dicarboxylic acids described above including aromatic esters, cycloalkyl esters, alkyl esters, hydroxyalkyl esters, alkoxy alkyl esters, and the like.

Examples of suitable vinyl aromatic monomers, to polymers of which the present invention's compounds can be post-added, include styrene, α-methylstyrene, vinyltoluene, ethylstyrene, isopropylstyrene, p-hydroxystyrene, p-acetoxystyrene, and p-chlorostyrene.

In particular, the urea functional acrylated and cyclic urea compounds may be post-added in effective amounts In aqueous polymer systems to enhance the adhesion/wet adhesion of paints made from the polymers. Maleuric, succinuric, fumauric, citraconuric, itaconuric acids and their alkyl esters may also be post-added in effective amounts in aqueous polymer systems to enhance the wet adhesion properties of paint compositions.

Typically, a mixture of cis and trans stereroisomers, mono and bis urea/ureido derivatives, oligomeric condensation products and unreacted starting components will be obtained by the above-discussed reactions. Depending on reaction conditions, etc., the mixture can be adjusted in various directions as desired, for example, to result in higher bis derivative. All combinations are useful as post-additive wet adhesion promotors.

That is to say, products resulting from the above reactions are actually complex mixtures of compounds, typically also with minor amounts of unreacted starting components. All products in the reaction mixtures containing cyclic urea/ureido functionality have been found to impart wet adhesion properties to an ultimate polymer system.

In fact, it is another aspect of the present invention to utilize these crude reaction mixtures, in and of themselves or further treated to remove a portion of the unreacted starting materials, as a wet adhesion promoting additive, as further described below.

The emulsion polymers used in formulating latex paints usually are acrylic copolymers comprising alkyl esters of acrylic and methacrylic acid with minor amounts of acrylic and methacrylic acid, or they are vinyl/acrylic polymers comprising vinyl containing monomers or polymers in combination with softer acrylic monomers. The commonly used ethylenically unsaturated monomers in making acrylic paints are butyl acrylate, methyl methacrylate, ethyl acrylate and mixtures thereof. In acrylic paint compositions at least 50% of the polymer formed is comprised of an ester of acrylic or methacrylic acid. The vinyl-acrylic paints usually include ethylenically unsaturated monomers such as vinyl acetate and butyl acrylate or 2-ethylhexyl acrylate. In vinyl acrylic paint compositions, at least 50% of the polymer formed is comprised of vinyl acetate, with the remainder being selected from the esters of acrylic or methacrylic acid.

The compounds hereof may be post-added to acrylic, styrene-acrylic or vinyl-acrylic polymers in a concentration which may vary over a wide range. Preferably the concentration is at least sufficient to improve the wet adhesion of paints made from the polymer composition. Concentrations may range from about 0.1% to about 40%, by weight, based on the total weight of polymer. Preferably, the concentration is in the range of from about 0.25% to about 5.0%, and more preferably from about 0.25% to about 1.0%, same basis.

The monomer composition from which the polymer latexes prepared may be used in conjunction with other ingredients, such as various free radical catalysts to initiate polymerization, emulsifying agents to protect particles from agglomeration, and buffers to maintain a desired pH during polymerization, as is generally well-known to those of ordinary skill in the art of polymerization. For example, suitable free radical polymerization catalysts are the catalysts known to promote emulsion polymerization and include water-soluble oxidizing agents such as organic peroxides (e.g., t-butyl hydroperoxide, cumene hydroperoxide, etc.), inorganic oxidizing agents (e.g., hydrogen peroxide, potassium persulfate, sodium persulfate, ammonium persulfate, etc.) and those catalysts that are activated in the water phase by a water-soluble reducing agent. Such catalysts are employed in a catalytic amount sufficient to cause polymerization. Generally, a catalytic amount ranges from about 0.01 to 5.0 parts per hundred parts of monomer. As alternatives to heat and catalytic compounds to activate polymerization, other free radical producing means, such as exposure to activating radiations, can be employed.

Suitable emulsifying agents include anionic, cationic, and nonionic emulsifiers customarily used in emulsion polymerization. Usually, at least one anionic emulsifier is utilized and one or more nonionic emulsifiers may also be utilized. Representative anionic emulsifiers are tile esters of sulfosuccinic acid, amides of sulfosuccinic acid, the alkyl aryl sulfonates, alkali metal alkyl sulfates, the sulfonated alkyl esters and fatty acid soaps. The emulsifying agents are employed in amounts to achieve adequate emulsification and to provide desired particle size and particle size distribution.

Examples of suitable buffers used to maintain a desired pH during polymerization include ingredients such as acids, salts, chain transfer agents and chelating agents. For example, if the polymerization constituents include a monoethylenically unsaturated carboxylic acid comonomer, polymerization under acidic conditions (pH 2-7, preferably 2-5) is preferred. In such instances, the aqueous medium can include those known weak acids and their salts that are commonly used to provide a buffered system at the desired pH range.

The manner of combining the polymerization ingredients can be various known monomer feed methods, such as, continuous monomer addition, incremental monomer addition, or addition in a single charge of the entire amount of monomers. The entire amount of the aqueous medium with polymerization additives can be present on the polymerization vessel before introduction of the monomer, or alternatively, the aqueous medium, or a portion of it, can be added continuously or incrementally during the course of the polymerization.

The polymerization of the monomer system which includes ethylenically unsaturated monomers can be accomplished by known procedures for polymerization In aqueous emulsions, as disclosed, for example, in U.S. Patent Nos. 3,366,613; 4,104,220; 2,881,171; 4,219,452 and EP0 626672A2, which are incorporated by reference herein for all purposes as if fully set forth. Pre-polymer monomeric starting materials used to form polymeric pre-emulsion compositions are typically dissolved or suspended in the aqueous medium to a desired concentration. Preferably, the polymerization of the invention is performed at a concentration range of about 10 weight-% to about 70 weight-% of the monomers in the aqueous medium, although somewhat higher or lower concentrations may be employed in some cases.

By way of example, polymerization is initiated by heating the emulsified mixture with continued agitation to a temperature usually between about 50°C to about 110°C, preferably between 60°C to about 100°C. Heating of the emulsified mixture is also preferably conducted in an inert atmosphere (e.g., purging with nitrogen, argon, etc.). Polymerization is continued by maintaining the emulsified mixture at the desired temperature until conversion of the monomer or monomers to polymer has been reached.

It is also within the scope of this invention to use blends of latices to which the compounds disclosed above may be post-added. The blended latices include those of acrylic, vinyl acrylic, styrene acrylic, styrene butadiene, styrene butadiene-acrylic as well as latices derived from esters of versatic acid (e.g., VEOVA-9 and VEOVA-10).

In addition to emulsion polymers, it is contemplated that the compounds described above may be post-added to solution copolymers. Polymerization towards the formulation of solution polymers may be completed under substantially similar circumstances as described above for emulsion polymerization except that the medium of polymerization in a solution polymerization reaction is organic instead of aqueous. Generally, the solution polymerization reaction is carried out with monomers in solution in an inert organic solvent such as tetrahydrofuran, methyl ethyl ketone, acetone, ethyl acetate, or other suitable organic solvents such as hexane, heptane, octane, toluene, xylene and mixtures thereof. In the case of water-soluble monomers, inverse emulsions may also be prepared. Inverse emulsion being defined as a water-soluble polymer system dispersed in an organic solvent. Preferred solvents are non-toxic and odorless.

As mentioned above, the compounds represented by Formula I wherein q is 1-15, inclusive, are new and novel. The compounds function to impart net adhesion to polymer latexes and paints produced therefrom when added as such to either the latex per se or the paint composition. Additionally, those novel compounds hereof where G is an unsaturated moiety are copolymerizable with the other monomers which generally make up the polymeric component of such latexes and thereby impart wet adhesion by becoming part of the polymer backbone as discussed more fully in copending U. S. Application Serial Number 08/881,623 filed June 23, 1997 which application is hereby incorporated herein by reference.

The invention will now be illustrated by the following examples. The examples are not intended to be limiting of the scope of the present invention. In conjunction with the general and detailed descriptions above, the examples provide further understanding of the present invention.

### Example 1

### Maleuric acid

### Compound C1

Maleuric acid was prepared according to the procedure of U.S. 2,717,908. A mixture of 500 g of maleic anhydride (5.1 moles) and 300 g of urea (5 moles) in 1000 mL of acetic acid was heated to 50 °C. The mixture was a homogeneous solution until maleuric acid began to precipitate out. After 12 hours, the mixture was cooled to room temperature overnight. The maleuric acid was filtered and washed with acetic acid to afford 530 g (67% yield). Additional maleuric acid precipitates from the mother liquor over time to afford nearly a quantitative yield. ¹H NMR (DMSO-*d*₆): d 12.8 (br s, 1 H),10.4 (br s, 1 H), 7.6 (br s, 1 H), 7.3 (br s, 1 H), 6.4 (s, 2 H).

### Example A

### N-Carbamylmaleimide

N-Carbamylmaleimide was prepared according to the procedure of U.S. 2,788,349. 500 g of maleuric acid was added to 1.5 L of acetic anhydride heated to 85 °C. After 30 minutes, the mixture became homogeneous. After an additional 1 hour, the solution was cooled to room temperature. The precipitated N-carbamylmaleimide was filtered and washed with acetone to afford 405 g (90% yield). ¹H NMR (DMSO-*d*₆): d 7.8 (br s,1 H), 7.4 (br s, 1 H), 7.1 (s, 2 H); ¹³C NMR (DMSO-*d*₆): d 169, 148, 135.

### Example 2

### Butyl maleurate

### Compound C2

A mixture of 140 g of N-carbamylmaleimide (1 mole), 1.36 g of zinc chloride (0.01 moles) and 150 g of *n*-butanol (2 moles) was heated to reflux. After 4 hours, the mixture was poured into 400 mL of water and cooled to room temperature. The butyl maleurate was filtered, washed with water and dried to afford 200 g (93% yield). M.P.: 97-9 °C; ¹H NMR (CDCl₃): d 10.6 (br s, 1 H), 8.2 (br s, 1 H), 6.3 (AB, 2 H), 5.9 (br s, 1 H), 4.2 (t, 2 H), 1.6 (m, 2 H), 1.4 (m, 2 H), ).9 (t, 3 H); HPLC (20 to 40% CH₃CN/H₂O over 20 minutes, C₈): Rₜ = 9.4 minutes.

### Example 3

### Methyl maleurate

### Compound C3

A mixture of 10 g of N-carbamylmaleimide (0.071 moles) in 40 mL of methanol was heated to reflux. After 6 hours, the excess methanol was evaporated to afford 11.5 g (93% yield) of methyl maleurate. M.P.: 112-14 °C; ¹H NMR (CDCl₃) d 10.4 (br s, 1 H), 8.2 (br s, 1 H), 6.3 (m, 2 H), 5.6 (br s, 1 H), 3.8 (s, 3 H); HPLC (5% CH₃CN/H₂O, C₈): Rₜ= 6.3 minutes.

### Example 4

### Isopropyl maleurate

### Compound C4

The addition of isopropanol to N-carbamylmaleimide under the conditions of example 2 afforded a 95% yield of isopropyl maleurate. M.P.: 113-14 °C; ¹H NMR (CDCl₃): d 10.6 (br s, 1 H), 8.2 (br s, 1 H), 6.3 (AB, 2 H), 5.8 (br s, 1 H), 5.2 (quintet, 1 H), 1.3 (d, 6 H); HPLC (20% CH₃CN/H₂O, C₈): Rₜ = 5.6 minutes.

### Example 5

### 2-Ethylhexyl maleurate

### Compound C5

The addition of 2-ethylhexanol to N-carbamylmaleimide under the conditions of example 2 afforded a 95% yield of 2-ethylhexyl maleurate. M.P.: 73-6 °C; ¹H NMR (CDCl₃): d 10.6 (br s, 1 H), 8.2 (br s, 1 H), 6.3 (m, 2 H), 5.8 (br s, 1 H), 4.2 (m, 2 H), 1.6 (m, 1 H), 1.3 (m, 8 H), 0.9 (t, 6 H); HPLC (40% CH₃CN/H₂O, C₈): Rₜ = 14.2 minutes.

### Example 6

### Hexadecyl maleurate

### Compound C6

A mixture of 49 g of hexadecanol (0.202 moles), 28 g of N-carbamylmaleimide (0.2 moles) and 270 mg of zinc chloride (0.002 moles) in 300 mL of *p*-dioxane was heated to reflux. After 24 hours, the mixture was cooled to room temperature and 200 mL of H₂O was added. The resulting solid was filtered, washed with additional H₂O and dried to afford 75 g (97% yield) of hexadecyl maleurate. M.P.: 106-09 °C (dec.); ¹H NMR (CDCl₃): d 10.5 (br s, 1 H), 8.2 (br s, 1 H), 6.3 (m, 2 H), 5.4 (br s, 1 H), 4.2 (t, 2 H), 1.6 (m, 2 H), 1.2 (m, 26 H), 0.9 (t, 3 H); HPLC (80% CH₃CN/H₂O, C₁₈): Rₜ = 6.9 minutes.

### Example 7

### Octadecyl maleurate

### Compound C7

The addition of octadecanol to N-carbamylmaleimide under the conditions of example 6 afforded a 97% yield of octadecyl maleurate. M.P.: 109-11 °C (dec.); ¹H NMR (CDCl₃): d 10.5 (br s, 1 H), 8.2 (br s, 1 H), 6.3 (m, 2 H), 5.4 (br s, 1 H), 4.2 (t, 2 H), 1.6 (m, 2 H), 1.2 (m, 30 H), 0.9 (t, 3 H); HPLC (80% CH₃CN/H₂O, C₁₈): Rₜ = 12.8 minutes.

### Example 8

### Allyl maleurate

### Compound C8

A mixture of 2.96 g of allyl alcohol (0.051 moles), 7 g of N-carbamylmaleimide (0.05 moles) and 110 mg of zinc acetate dihydrate (0.0005 moles) in 20 mL of acetonitrile was heated to reflux. After 8 hours, the acetonitrile was evaporated. The solid was washed with H₂O and dried to afford 9.9 g (99% yield) of ally maleurate. M.P.: 108-10 °C; ¹H NMR (DMSO-*d*₆): d 10.5 (br s, 1 H), 7.6 (br s, 1 H), 7.3 (br s, 1 H), 6.5 (AB, 2 H), 5.9 (m, 1 H), 5.3 (d of d, 1 H), 5.2 (d of d, 1 H), 4.6 (d, 2 H); HPLC (10% CH₃CN/H₂O, C₁₈): Rₜ= 4.9 minutes.

### Example 9

### 2-Hydroxyethyl acrylate maleurate

### Compound C9

A mixture of 140 g of N-carbamylmaleimide (1 mole), 121.8 g of 2-hydroxyethyl acrylate (1.05 moles) and 1.36 g of zinc chloride (0.01 moles) in 200 mL of acetonitrile was heated to reflux. After 5 hours, the mixture was poured into 500 mL of water. The solid was filtered, washed with water and dried to afford 240.7 g (94% yield) of 2-hydroxyethyl acrylate maleurate. M.P.: 88-90 °C (dec.); ¹H NMR (CDCl₃): d 10.4 (br s, 1 H), 8.2 (br s, 1 H), 6.4 (m, 3 H), 6.2 (d of d, 1 H), 5.9 (m, 2 H), 4.4 (A₂B₂, 4 H); ¹³C NMR (CDCl₃): d 165.9, 165.3, 165.2, 155.1, 133.1, 131.6, 129.5, 127.8, 63.2, 61.9; HPLC (10% CH₃CN/H₂O, C₁₈): Rₜ= 5.7 minutes.

### Example 10

### 2-Hydroxypropyl acrylate maleurate

### Compound C10

The maleurate ester of 2-hydroxypropyl acrylate was prepared in 95% yield according to the procedure in example 9 The hydroxypropyl derivative is a mixture of isomers and therefore not crystalline. In this case, the acetonitrile was evaporated from the crude reaction mixture and no further purification was done. ¹H NMR (CDCl₃): d 10.5, 8.2, 6.0-6.4, 5.8, 5.3, 4.0-4.4, 1.3; HPLC (10% CH₃CN/H₂O, C₁₈): Rₜ= 12 and 13.9 min.

### Example 11

### 2-Hydroxypropyl methacrylate maleurate

### Compound C11

The maleurate ester of 2-hydroxypropyl methacrylate was prepared in 95% yield according to the procedure in example 9 The hydroxypropyl derivative is a mixture of isomers and therefore not crystalline. In this case, the acetonitrile was evaporated from the crude reaction mixture and no further purification was done. ¹H NMR (CDCl₃): d 10.4, 8.2, 6.4, 6.2, 5.8, 5.6, 5.3, 4.0-4.4, 2.0, 1.3; HPLC (10% CH₃CN/H₂O, C₁₈): Rₜ = 5.9 and 6.8 min.

### Example 12

### 2-Hydroxyethyl methacrylate maleurate

### Compound C12

A mixture of 140 g of N-carbamylmaleimide (1 mole), 130 g of 2-hydroxyethyl methacrylate (1 mole) and 1.36 g of zinc chloride (0.01 moles) in 200 mL of acetonitrile was heated to reflux. After 6 hours, the acetonitrile was evaporated and 500 mL of H₂O was added. The solid was filtered and dried to afford 200 g (74% yield) of 2-hydroxyethyl methacrylate maleurate. M.P.: 62°-4°C (dec.); ¹H NMR (CDCl₃): d 10.5 (br s, 1 H), 8.2 (br s, 1 H), 6.4 (m, 2 H), 6.1 (m, 1 H), 5.8 (br s, 1 H), 5.6 (m, 1 H), 4.4 (A₂B₂, 4 H), 2.0 (m, 3 H); ¹³C (CDCl₃): d 167.1, 165.24, 165.23, 155.1, 135.8, 132.9, 129.6, 126.2, 63.2, 62.0, 18.2; HPLC (20% CH₃CN/H₂O, C₁₈): Rₜ= 3.5 minutes.

### Example 12A

### 2-Hydroxyethyl methacrylate maleurate with zinc acetate

### Compound C12A

A mixture of 7 g of N-carbamylmaleimide (0.05 moles), 6.5 g of 2-hydroxyethyl methacrylate (0.05 moles) and 110 mg of zinc acetate dihydrate (0.0005 moles) in 12 mL of acetonitrile was heated to reflux. After 6 hours, the acetonitrile was evaporated and the product precipitated from H₂O to afford 9.7 g (72%).

### Example 12B

### 2-Hydroxyethyl methacrylate maleurate with dibutyltin dilaurate

### Compound C12B

A mixture of 7 g of N-carbamylmaleimide (0.05 moles), 6.5 g of 2-hydroxyethyl methacrylate (0.05 moles) and 320 mg of dlbutyltin dilaurate (0.0005 moles) in 12 mL of acetonitrile was heated to reflux. After 6 hours, the acetonitrile was evaporated and the product precipitated from H₂O to afford 10.3 g (76%).

### Example 12C

### 2-Hydroxyethyl methacrylate maleurate with diacetoxytetrabutyldisfannoxane

### Compound C12C

A mixture of 7 g of N-carbamylmaleimide (0.05 moles), 6.5 g of 2-hydroxyethyl methacrylate (0.05 moles) and 300 mg of diacetoxytetrabutyldistannoxane (0.0005 moles) in 12 mL of acetonitrile was heated to reflux. After 6 hours, the acetonitrile was evaporated and the product precipitated from H₂O to afford 10.3 g (76%).

### Example 12D

### 2-Hydroxyethyl methacrylate maleurate with titanium isopropoxide

### Compound C12D

A mixture of 7 g of N-carbamylmaleimide (0.05 moles), 6.5 g of 2-hydroxyethyl methacrylate (0.05 moles) and 140 mg of titanium isopropoxide (0.0005 moles) in 12 mL of acetonitrile was heated to reflux. After 6 hours, the acetonitrile was evaporated and the product precipitated from H₂O to afford 10.2 g (75%).

### Example 12E

### 2-Hydroxyethyl methacrylate maleurate in acetic acid

### Compound C12E

A mixture of 7 g of N-carbamylmaleimide (0.05 moles), 6.5 g of 2-hydroxyethyl methacrylate (0.05 moles) and 110 mg of zinc acetate dihydrate (0.0005 moles) in 9 mL of acetic acid was heated to 85 C. After 6 hours, the acetic acid was evaporated and the product precipitated from H₂O to afford 10 g (74%).

### Example 12F

### 2-Hydroxyethyl methacrylate maleurate in methyl methacrylate

### Compound C12F

A mixture of 14 g of N-carbamylmaleimide (0.1 mole), 14.3 g of 2-hydroxyethyl methacrylate (0.11 moles), 136 mg of zinc chloride (0.001 moles) and 30 g of methyl methacrylate was heated to 85°C. After 6 hours the mixture was cooled to room temperature to afford 56.7 g of mixture (97 % of theory).

### Example 12G

### 2-Hydroxyethyl methacrylate maleurate: one-pot procedure

### Compound C12G

A mixture of 59.8 g of maleic anhydride (0.61 moles) and 36 g of urea (0.6 moles) in 50.3 g of acetic acid was heated to 50°C. After 12 hours, 63.7 g of acetic anhydride (0.624 moles) was added and the temperature increased to 80°C. After 1 hour the mixture became homogeneous. After an additional hour, 67.6 g of 2-hydroxyethyl methacrylate (0.52 moles), 1.2 g of zinc acetate dihydrate (0.0055 moles) and 28 mg of MEHQ were added and the mixture was stirred at 80°C. After 6 hours, most (approximately 80% by weight) of the acetic acid was distilled off. NMR analysis of the product indicated the purity of the methacrylate maleurate to be around 90%. Identified impurities detected include N-carbamylmaleimide, maleimide, 2-acetoxyethyl methacrylate, acetic anhydride and acetic acid.

### Example B

### Hydroxyethylethyleneurea

A mixture of 93.3 g of 2-(2-aminoethylamino)ethanol (0.9 moles) and 52.1 g of urea (0.87 moles) was heated slowly to 230°C with stirring. The evolution of ammonia began when the temperature reached 130°C. The reaction mixture was heated at 230°C for 2 hours. The mixture solidified to a light-yellow solid after it had cooled to room temperature to afford 110.5 g of hydroxyethylethyleneurea. Recrystallized from acetone, M.P.: 55-57.5°C; ¹H NMR (DMSO-*d*₆): d 6.3 (s, 1 H), 4.6 (s, 1 H), 3.5-3.0 (m, 8 H).

### Example C

### Aminoethylethyleneurea

A mixture of 206.4 g of diethylenetriamine (2 moles) and 117.0 g of urea (1.95 moles) was slowly heated to 210°C. The evolution of ammonia began when the temperature of the reaction mixture reached 130°C. The reaction mixture was then held at 210°C for 3 hours before it was distilled under vacuum to afford 132 g of aminoethylethyleneurea. B.P.: 175°C (1.5 mm); ¹H NMR (DMSO-*d*₆): d 6.3 (s, 1 H), 3.4-2.5 (m, 8 H), 1.4 (s, 1 H).

### Example 13

### Maleurate ester of hydroxyethylethyleneurea

### Compound C13

A mixture of 3 g of hydroxyethylethyleneurea (0.023 moles), 3.2 g of N-carbamylmaleimide (0.023 moles), 0.15 g of zinc acetate (0.0007 moles) was refluxed in 25 mL of acetonitrile. After 6 hours, the reaction mixture was cooled to room temperature and the acetonitrile was evaporated to afford 6.2 g of hydroxyethylethyleneurea maleurate as a tan solid. ¹H NMR (DMSO-*d*₆): d 10.5 (s, 1 H), 7.6 (s, 1 H), 7.3 (s, 1 H), 6.4 (s, 2 H), 6.3 (s, 1 H), 4.2 (t, 2 H), 3.4 (t, 3 H), 3.1-3.3 (m, 4 H).

### Example 13A

### Maleurate ester of hydroxyethylethyleneurea: one pot procedure

### Compound C13A

A mixture of 59.8 g of maleic anhydride (0.61 moles) and 36 g of urea (0.6 moles) in 50.3 g of acetic acid was heated to 50°C. After 12 hours, 63.7 g of acetic anhydride (0.624 moles) was added and the temperature increased to 80°C. After 1 hour the mixture became homogeneous. After an additional hour, 70.2 g of hydroxyethylethyleneurea maleurate (0.54 moles) and 1.2 g of zinc acetate dihydrate (0.0055 moles) were added and the mixture was stirred at 80°C. After 6 hours, most (approximately 80% by weight) of the acetic acid was distilled off. NMR analysis of the product indicated the purity of the hydroxyethylethyleneurea maleurate to be around 90%. Identified impurities detected include N-carbamylmaleimide, maleimide, acetoxyethylethyleneurea maleurate, acetic anhydride and acetic acid.

### Example 14

### Maleuramide of aminoethylethyleneurea

### Compound C14

To an aqueous solution of 3.0 g of aminoethylethyleneurea (0.023 moles) in 20 mL of H₂O was added portionwise 3.26 g of N-carbamylmaleimide (0.025 moles) over 15 minutes. The reaction mixture was stirred at room temperature for 3 hours. The H₂O was then evaporated to afford 6.3 g of crude aminoethylethyleneurea maleuramide.

### Example D

### N-Carbamylsuccinic acid

### (Succinuric acid)

N-carbamylsuccinic acid was prepared according to the procedure in U.S. 2,788,349. A mixture of 20.4 g of succinic acid (0.203 mol) and 12 g of urea (0.2 mol) in 50 mL of acetic acid was heated to 60°C. After 12 hours, the mixture was allowed to cool to room temperature and filtered. The solid was washed with hexanes and dried to afford 16.4 g of N-carbamylsuccinic acid. ¹H NMR (DMSO-*d*₆): d 10.2 (br s, 1 H), 7.7 (br s, 1 H), 7.2 (br s,1 H), 2.5 (m, 4 H).

### Example E

### N-Carbamylsuccinimide

N-carbamylsuccinimide was also prepared according to the procedure in U.S. 2,788,349. 12 g of N-carbamylsuucinic acid (0.075 mol) in 40 mL of acetic anhydride was heated to 90°C. After 1 hour, the mixture was concentrated until precipitation occured. The solid was filtered, washed with hexane and dried to afford 10.1 g of N-carbamylsuccinimide. ¹H NMR (DMSO-*d*₆): d 7.9 (br s, 1 H), 7.7 (br s, 1 H), 2.9 (s, 4 H).

### Example 15

### Succinurate ester of 2-hydroxyethyl methacrylate

### Compound C15

A mixture of 4.26 g of N-carbamylsuccinimide (0.03 mole), 4.29 g of 2-hydroxyethyl methacrylate (0.033 moles) and 40 mg of zinc chloride (0.0003 moles) in 5 mL of acetonitrile was heated to reflux. After 6 hours the mixture was cooled to room temperature and the acetonitrile was evaporated to afford 8.2 g of 2-hydroxyethyl methacrylate succinurate as a viscous oil. ¹H NMR (CDCl₃): d 10.1 (br s), 8.3 (br s), 6.4 (br s), 6.2 (m, 1 H), 5.6 (m, 1 H), 4.4 (m, 4 H), 2.7 (m, 4 H), 1.9 (m, 3 H); HPLC (10% CH₃CN/H₂O, C₈): Rₜ = 2.7 minutes.

### Example 16

### Isomerization of 2-hydroxyethyl methacrylate maleurate to the fumaurate

### Compound C16

A mixture of 8.1 g of 2-hydroxyethyl methacrylate maleurate and 0.81 g of sulfuric acid in 45 mL of acetonitrile was heated to reflux. After 12 hours, the mixture was cooled to room temperature and H₂O was added. The mixture was filtered, washed with H₂O and dried to afford 7.1 g (87% yield) of the fumaurate. M.P.: 135-38°C; ¹H NMR (DMSO-*d*₆): d 10.6 (br s, 1 H), 7.7 (br s, 1 H), 7.4 (br s, 1 H), 7.2 (d, 1 H), 6.8 (d, 1 H), 6.0 (m, 1 H), 5.7 (m, 1 H), 4.4 (A₂B₂, 4 H), 1.9 (m, 3 H); HPLC (20% CH₃CN/H₂O, C₁₈): Rₜ = 7.7 minutes. HPLC analysis of the mother liquor indicated a mixture of the maleurate (Rₜ= 3.7 minutes) and the fumaurate.

### Example 17

### Maleuramide of allylamine

### Compound C17

2.8 g of N-carbamylmaleimide (0.02 moles) was reacted with 1.4 g of allyl amine (0.02 moles) in 10 mL of acetonitrile at room temperature. After 30 minutes, the acetonitrile was evaporated to afford a mixture which contains approximately 50% of the desired maleuramide.

### Example 18

### Citraconuric acid

### Compound C18

Citraconuric acid was prepared according to the procedure of U.S. 2,717,908. A mixture of 286 g of citraconic anhydride (2.55 moles) and 150 g of urea (2.5 moles) in 500 mL of acetic acid was heated to 50°C. After 12 hours, the mixture was cooled to room temperature overnight. Most of the acetic acid was evaporated. The citraconuric acid was filtered and washed with acetic acid to afford 215 g (50% yield).

### Example F

### N-Carbamylcitraconimide

N-Carbamylcitraconimide was prepared according to the procedure of U.S. 2,788,349. 167 g of citraconuric acid (0.97 moles) was added to 500 mL of acetic anhydride heated to 85°C. After 30 minutes, the mixture became homogeneous. After an additional 1 hour, the solution was cooled to room temperature. The precipitated N-carbamylcitraconimide was filtered and washed with acetone to afford 105 g (70% yield).

### Example 19

### Itaconuric acid

### Compound C19

Itaconuric acid was prepared according to the procedure of U.S. 2,717,908. A mixture of 123 g of itaconic anhydride (1.1 moles) and 60 g of urea (1 moles) in 200 mL of acetic acid was heated to 50°C. After 12 hours, the mixture was cooled to room temperature overnight. Most of the acetic acid was evaporated. The itaconuric acid was filtered and washed with acetic acid to afford 51 g (30% yield).

### Example G

### N-Carbamylitaconimide

N-Carbamylitaconimide was prepared according to the procedure of U.S. 2,788,349. 30 g of itaconuric acid (0.17 moles) was added to 100 mL of acetic anhydride heated to 85°C. After 30 minutes, the mixture became homogeneous. After an additional 1 hour, the solution was cooled to room temperature. The precipitated N-carbamylitaconimide was filtered and washed with acetone to afford 16 g (60% yield).

### Example 20

### Octadecyl citraconurate

### Compound C20

A mixture of 27.6 g of octadecanol (0.101 moles), 15.4 g of N-carbamylcitraconimide (0.1 moles) and 135 mg of zinc chloride (0.001 moles) in 150 mL of *p*-dioxane was heated to reflux. After 24 hours, the mixture was cooled to room temperature and 100 mL of H₂O was added, The resulting solid was filtered, washed with additional H₂O and dried to afford nearly a quantitative yield of octadecyl citraconurate.

### Example 21

### Octadecyl itaconurate

### Compound C21

A mixture of 5.47 g of octadecanol (0.02 moles), 3.08 g of N-carbamylitaconimide (0.02 moles) and 27.0 mg of zinc chloride (0.0002 moles) in 30 mL of *p*-dioxane was heated to reflux. After 24 hours, the mixture was cooled to room temperature and 20 mL of H₂O was added. The resulting solid was filtered, washed with additional H₂O and dried to afford nearly a quantitative yield of octadecyl itaconurate.

### Example 22

### 2-Hydroxyethyl methacrylate citraconurate

### Compound C22

A mixture of 15.4 g of N-carbamylcitraconimide (0.1 mole), 13.0 g of 2-hydroxyethyl methacrylate (0.1 mole) and 0.14 g of zinc chloride (0.001 moles) in 20 mL of acetonitrile was heated to reflux. After 6 hours, the acetonitrile was evaporated and 50 mL of H₂O was added. The solid was filtered and dried to afford 19.8 g (70% yield) of 2-hydroxyethyl methacrylate citraconurate.

### Example 23

### 2-Hydroxyethyl methacrylate itaconurate

### Compound C23

A mixture of 3.08 g of N-carbamylitaconimide (0.02 moles), 2.6 g of 2-hydroxyethyl methacrylate (0.02 moles) and 27.2 mg of zinc chloride (0.0002 moles) in 4 mL of acetonitrile was heated to reflux. After 6 hours, the acetonitrile was evaporated and 50 mL of H₂O was added. The solid was filtered and dried to afford 3.41 g (60% yield) of 2-hydroxyethyl methacrylate itaconurate.

### Example 24

### Reaction of AEEU with Tetrahydrophthalic Anhydride

### Compound C24

A solution of 5.0 g (0.0329 moles) of anhydride in 10 mL of acetonitrile was cooled in a water bath. A solution of 4.3 g (0.033 moles) of AEEU in 10 mL of acetonitrile was added dropwise. The addition of the solution of AEEU was complete in 15 minutes after which a white solid appeared. After stirring overnight, the supernatant in the flask was decanted. The remaining solid was washed twice with acetonitrile and vacuum dried to afford 8.7 g of crude product. ¹H NMR (DMSO-*d*₆): δ 7.9 (broad s, 1 H), 6.6 (s, 2 H), 6.3 (s, 1 H), 3.4-3.0 (m, 8 H), 2.8-2.6 (m, 2 H), 2.6-2.2 (m, 4 H).

### Example 25

### Reaction of HEEU with Tetrahydrophthalic Anhydride

### Compound C25

A mixture of 15 g (0.098 moles) of anhydride, 12.8 g (0.0985 moles) of HEEU and 0.5 g (0.0023 moles) of zinc acetate dihydrate in 35 mL of acetonitrile was refluxed for 4 hours. The acetonitrile was evaporated to afford 28.5 g of a white solid. ¹H NMR (DMSO-*d*₆): δ 6.0 (broad s, 1 H), 5.7 (s, 2 H), 4.2 (t, 2 H), 3.8-3.2 (m, 6 H), 3.2-3.0 (m, 2 H), 2.6-2.2 (m, 4 H).

### Example 26

### Reaction of HEEU with Nadic Anhydride

### Compound C26

A mixture of 12 g (0.0731 moles) of anhydride, 9.5 g (0.0731 moles) of HEEU and 0.5 g (0.0023 moles) of zinc acetate dihydrate in 40 mL of acetonitrile was refluxed for 4 hours. The mixture was allowed to cool to room temperature. The precipitated solid was filtered, washed with acetonitrile and air dried to afford 13.5 g of product. ¹H NMR (DMSO-*d*₆): δ 11.9 (s, 1 H), 6.3 (s, 1 H), 6.2-6.0 (m, 2 H), 4.1-3.8 (m, 2 H), 3.4-3.1 (m, 8 H), 3.0 (m, 2 H), 1.4-1.2 (m, 2 H).

### Example 27

### Reaction of HEEU with exo-3,6-Epoxy-1,2,3,6-Tetrahydrophthalic Anhydride

### Compound C27

A mixture of 12 g (0.072 moles) of anhydride, 9.4 g (0.0722 moles) of HEEU and 0.5 g (0.0023 moles) of zinc acetate dihydrate in 40 mL of acetonitrile was refluxed for 5 hours. The acetonitrile was evaporated to afford 22.5g. ¹H NMR (DMSO-*d*₆): δ 6.4-6.2 (d, 3 H), 4.1 (t, 2 H), 3.8-3.0 (m, 10 H).

### Example 28

### Reaction of HEEU with Dimethyl Maleate

### Di-(β-(Ethyleneureido)ethyl)Maleate

### Compound C28

A mixture of 16.6 g (0.115 moles) of dimethyl maleate, 30 g (0.231 moles) of HEEU and 0.5 g of titanium isopropoxide was heated at 145°C with stirring. Methanol formed from the reaction was distilled off. After about 5 hours, the theoretical amount of methanol (7.8 g) had been collected. The reaction mixture was cooled to room temperature and analyzed by NMR. Analysis indicated a mixture of cis- and trans-di-(β-(ethyleneureido)ethyl)maleate, cis-and trans-β-(ethyleneureido)ethyl methyl maleate and dimethyl maleate. ¹H NMR (DMSO-*d*₆): δ 6.8-6.6 (m, 2 H), 6.5-6.4 (m, 2 H), 4.5-4.2 (m, 6 H), 3.6-3.2 (m, 12 H). LC-MS confirmed the presence of the above listed compounds. Also present are the oligomers and isomers of the above materials.

### Examples 28A-28C

### Reaction Product of HEEU and Dimethylmaleate (DMM) at Various Mole Ratios and Different Catalysts

The above reactions were carried out following the procedure of Example 28 using the HEEU/DMM mole ratios and catalysts listed below. The reaction mixtures were tested without purification.

| Example | HEEU/DMM Mole Ratio | Catalyst |
|---|---|---|
| 28A | 1:1 | Zn(OAc)₂ |
| 28B | 1.5:1 | TPT(tetraisopropyltitanate) |
| 28C | 1.25:1 | TPT |

### Example 28D

### Reaction of HEEU with Diethyl Maleate

### Di-(β-(Ethyleneureido)ethyl)Maleate

### Compound C28A

A mixture of 23.9 g (0.139 moles) of diethyl maleate, 36.08 g (0.278 moles) of HEEU and 0.7 g of Ti(OiPr)4 was heated at 145°C. Ethanol formed from the reaction was distilled off. After 4 hours the reaction mixture was cooled to room temperature. LC-MS analysis showed a mixture of cis- and trans-di-(β-(ethyleneureido)ethyl)maleate, cis- and trans-β-(ethyleneureido)ethyl ethyl maleate and diethyl maleate together with isomers and oligomers of these materials.

### Example 29

### Reaction of HEEU with HEEU Maleate

### Di-(β-(Ethyleneureido)ethyl)Maleate

### Compound C29

A mixture of 1.43 g (0.011 moles) of HEEU and 2.3 g (0.01 moles) of HEEU maleate in 10mL of CH₂Cl₂ was stirred at 0°C. Thionyl chloride (1.2 g, 0.01 moles) was added dropwise over 20 minutes. After addition was complete, the mixture was stirred for 12 hours at room temperature. The reaction mixture was filtered and evaporated to afford monomer M29 as a mixture with several other components.

### Example 30

### Reaction of HEEU with Fumaryl Chloride

### trans-Di--β-(Ethyleneureido)ethyl)Maleate

### Compound C30

A mixture 2.6g (0.02 moles) of HEEU and 1.53 g (0.01 moles) of fumaryl chloride in 10 mL of CH₂Cl₂ was stirred at 0°C for 3 h, followed for 12 h at room temperature. The reaction mixture was filtered and evaporated to afford monomer M30 as a mixture with several other components.

### Example 31

### Reaction of AEEU with AEEU Maleamide

### cis-Di--β-(Ethyleneureido)ethyl)Maleate

### Compound C31

A mixture of 1.42 g (0.011 moles) of AEEU and 2.27g (0.01 moles) of HEEU Maleamide in 10 mL of CH₂Cl₂ was stirred at 0°C. Thionyl chloride (1.2 g, 0.01 moles) was added dropwise over 20 minutes. After addition was complete, the mixture was stirred for 12 hours at room temperature. The reaction mixture was filtered and evaporated to afford monomer M31 as a mixture with several other components.

### Example 32

### Reaction of AEEU with Fumaryl Chloride

### trans-Di--β-(Ethyleneureido)ethyl)Fumaramide

### Compound C32

A mixture 2.58g (0.02 moles) of AEEU and 1.53 g (0.01 moles) of fumaryl chloride in 10 mL of CH₂Cl₂ was stirred at 0°C for 3 hours, followed for 12 hours at room temperature. The reaction mixture was filtered and evaporated to afford monomer M32 as a mixture with several other components.

### Example 33

### Ethylene Glycol Vinyl Ether Maleurate

### Compound C33

A mixture of 4.4 g (0.05 moles) of ethylene glycol vinyl ether and 7 g (0.05 moles) of NCMl in 10 mL of acetonitrile was refluxed for 8 h. The mixture was filtered and the filtrate evaporated to afford a mixture containing the maleurate. ¹H NMR (CDCl₃): δ 10.45, 6.5, 6.4, 4.8, 4.4-4.2, 4.0-3.6.

### Example 34

### Lactic Acid Vinyl Ester Maleurate

### Compound C34

A mixture of 2.3 g (0.05 moles) lactic acid vinyl ester (made according to the procedure of US 2,384,117) and 7 g (0.05 moles) of NCMl in 10 mL of acetonitrile was refluxed for 8 hours. The mixture was filtered and the filtrate evaporated to afford a mixture containing the maleurate.

### Example 35

### Reaction of HEMA with NCNDl

### Compound C35

A mixture of 9.7 g (0.05 moles) of N-carbamylnadicmaleimide (made according to the procedure of Hung., 153,988), 6.5 g of 2-hydroxyethyl methacrylate (0.05 moles) and 110 mg of zinc acetate dihydrate (0.0005 moles) in 12 mL of acetonitrile was heated to reflux. After 6 hours, the acetonitrile was evaporated and the product precipitated from H₂O.

### Example 36

### Reaction of HEMA with HEEU Maleate

### Compound C36

A mixture of 2.3 g (0.01 moles) of HEEU maleate, 1.43 g (0.011 moles) of HEMA, and 0.02 g of Ti(OiPr)₄ in 20 mL of toluene was heated to reflux. After 8 h, the mixture was cooled to room temperature and 0.1 g of H₂O was added. The liquid phase was decanted and concentrated to afford a mixture by NMR and LC-MS analysis. The presence of an AB pattern at δ 4.4 indicated a HEMA maleate product. The product was confirmed by LC-MS identification (M+1 = 341).

### Example 36A

### Reaction of HEEU with HEMA Maleate

### Compound C36A

A mixture of 6.2 g (0.027 moles) of HEMA maleate (made according to the procedure of US 3,150,118), 3.99 (0.03 moles) of HEEU, and 0.05 g of Ti(OiPr)₄ in 30 mL of toluene was heated to reflux. After 8 h, the mixture was cooled to room temperature and 0.2 g of H₂O was added. The liquid phase was decanted and concentrated to afford a mixture containing monomer M32 in low yield by NMR and LC-MS analysis.

### Example 36B

### Reaction of HEMA with HEEU Maleate

### Compound C36B

A mixture of 1.43 g (0.011 moles) of HEMA and 2.3 g (0.01 moles) of HEEU maleate in 10 mL of CH₂Cl₂ was stirred at room temperature. Thionyl chloride (1.2 g, 0.01 moles) was added dropwise over 20 minutes with control of the exotherm by a water bath. After addition was complete, the mixture was stirred for 1 hour at room temperature followed by refluxing for 12 hours. After cooling to room temperature, 2.1 g (0.021 moles) of N-methylmorpholine was added and the mixture stirred at room temperature for 12 hours. The reaction mixture was filtered and evaporated to afford monomer M32.

### Example 37

### Reaction of HEMA with AEEU Maleate

### Compound C37

A mixture of 2.3 g (0.01 moles) of AEEU maleate (made according to the procedure of US 2,980,652) and 1.43 g (0.011 moles) of HEMA in 10 mL of CH₂Cl₂ was stirred at room temperature. Thionyl chloride (1.2 g, 0.01 moles) was added dropwise over 20 minutes with control of the exotherm by a water bath. After addition was complete, the mixture was stirred for 1 hour at room temperature followed by refluxing for 12 hours. After cooling to room temperature, 2.1 g (0.021 moles) of N-methylmorpholine was added and the mixture stirred at room temperature for 12 hours. The reaction mixture was filtered and evaporated to afford monomer M33.

### Example 38

### Reaction of HEEU with NCNDl

### Compound C38

A mixture of 9.7 g (0.05 moles) of NCNDl, 6.5 g of HEEU (0.05 moles) and 110 mg of zinc acetate dihydrate (0.0005 moles) in 12 mL of acetonitrile is heated to reflux. After 6 hours, the acetonitrile is evaporated and monomer M34 is obtainable.

### Example 39

### Reaction of HEEU with Maleamic Acid

### Compound C39

A mixture of 6.5 g of HEEU (0.05 moles), 5.75 g of maleamic acid (0.05 moles) and 50 mg of H₂SO₄ (0.0005 moles) in 20 mL of toluene was heated at 80°C and partial vacuum to reflux the mixture. After 8 hours, the toluene was evaporated to afford a mixture of cis- and trans- HEEU maleamate.

### Example 40

### Reaction of Hydroxypropyl Methacrylate with Fumauric Acid

### Compound C40

A mixture of 1.44 g (0.01 moles) of hydroxypropyl methacrylate, 1.58 g (0.01 moles) of fumauric acid (transisomer of maleuric acid) and 50 mg of H₂SO₄ in 20 ml of toluene was heated to reflux. After 8 hours the mixture was filtered and the filtrate evaporated to afford a mixture of hydroxypropyl methacrylate and the *trans*- isomer of monomer M12.

### Example 41

### Reaction of Ethylene Urea with NCMl

### Compound C41

A mixture of 4.3 g (0.05 moles) of ethylene urea and 7.0g (0.05 moles) of NCMl in 10 mL AcOH was stirred at 50°C for 12 hours. After cooling to room temperature, the mixture was concentrated. The crude reaction product was a mixture by NMR analysis. Representative signals of the maleuramide are δ 10.4 and 6.4.

### Example 42

### Reaction of Ethylene Glycol with Dimethyl Maleate

To a mixture of 56.0 g dimethyl maleate (0.39 mole), and 12.1 g ethylene glycol (0.19 mole) heated at 70°C. was added 0.70 g titanium isopropoxide. The mixture was then heated at 155°C. with stirring. Methanol formed from the reaction was distilled off, and after five hours 9.4 g methanol was collected. The crude reaction product, 58.9 g, was a cloudy liquid at room temperature.
H¹NMR (CDCl₃): 6.2-6.4(d), 4.5(s), 3.8(s).

### Example 43

### Reaction of Product HEEU with Product of Example 42

The product of Example 42, 58.9 g, 49.7 g HEEU (0.382 mole) and 0.4 g titanium isopropoxide was heated at 155°C. with stirring. Methanol was distilled off, and after four hours 4.9 g methanol was collected. The residual methanol in the mixture was stripped off at 100°C. under reduced pressure (100 mmHg; 15 minutes). The final product weighed 105.7 g. NMR analysis showed the presence of ethylene glycol-bridged mono and bis-HEEU esters together with oligomers and isomers.

### Example 44

### Reaction of Ethylene Glycol with Dimethyl Succinate

The reaction procedure was similar to that of Example 42 except 50.0 g dimethyl succinate (0.342 mole). 10.8 g ethylene glycol (0.174 mole), and 0.61 g titanium isopropoxide were used. The crude reaction product, a cloudy liquid, weighed 54.7 g, and 6.30 g methanol was collected from the reaction.
H¹NMR (CDCl₃): 4.3(s), 3.7(s), 2.7(s).

### Example 45

### Reaction of Product of HEEU with Product of Example 44

The product of Example 44, 54.66 g, HEEU 44.7g, and 0.4 g of titanium isopropoxide was heated at 155°C with stirring. Methanol formed from the reaction was distilled off, and after 3.5 hours 6.1 g methanol was collected. The reaction mixture was stripped off the residual methanol at 80°C. under reduced pressure (100 mm Hg; 15 minutes). The final product, an oil, weighed 89.8 g. H¹MR analysis showed the presence of ethylene glycol-di(β-ethyleneureido)ethyl succinate plus isomers and oligomers.

### Example 46

### Reaction of HEEU with Dimethyl Succinate using Titanium Isopropoxide Catalyst

To a mixture of 76.0 g of dimethyl succinate (0.520 mole) and 135.2 g of HEEU (1.04 moles) heated at 70°C. was added 2.1 g of titanium isopropoxide. The mixture was heated at 155°C. with stirring. Methanol formed from the reaction was distilled off, and after five hours 17.8 g of methanol was collected (53.5% yield). The residual methanol in the reaction mixture was stripped off at 105°C. under reduced pressure (90mm Hg; 15 minutes). The product weighed 191.3 g, was a light tan oil.
H¹NMR (DMSO-*d*₆); 6.4(s), 6.3(s), 4.7(bs), 4.0-4.2(t), 3.0-3.6(m), 2.6(s).

H¹MR analysis showed the presence of mono and di-(β-ethyleneureido)ethyl succinate plus isomers and oligomers.

### Example 47

### Reaction of HEEU with Dimethyl Adipate

To a mixture of 88.14 g of dimethyl adipate (0.51 mole) and 131.6 g of HEEU (1.01 moles) heated at 85°C. was added 2.2 g of titanium isopropoxide. The mixture was heated at 170°C. with stirring. Methanol produced in the reaction was distilled off. After five hours 22.2 g of methanol was collected (69.0% yield). The reaction mixture was allowed to cool to 100°C., and the residual methanol in the mixture was stripped off under vaccuum (90 mmHg; 15 minutes). The product weighed 198.1 g, was a light tan oil. H¹NMR (DMSO-d₆): 6.4(s), 6.3(s), 4.7(s), 4.0-4.2(t), 3.0-3.6(m), 2.2-2.4(m), 1.4-1.6(m).

H¹NMR analysis showed the presence of mono and di(β-ethylene ureido)ethyl adipate plus isomers and oligomers.

### Example 48

### Reaction of HEEU with Dimethyl Succinate using Zinc Acetate Catalyst

A mixture of 74.20 g dimethyl succinate (0.51 mole), 132.0 g HEEU (1.02 mole), and 1.03 g zinc acetate dihydrate was heated at 155°C. with stirring. Methanol formed from the reaction was distilled off. After five hours, 17.9 g of methanol was collected (55% yield). The residual methanol in the mixture was stripped off at 110° under reduced pressure (90 mmHg; 15 minutes). The product, an oil, weighed 186.9 g. H¹NMR (DMSO-d₆): 6.4(s), 6.3(s), 4.7(bs), 4.0-4.2(t), 3.0-3.6(m), 2.6(s).

H¹NMR analysis showed the presence of mono and di-(β-(ethyleneureido)ethyl)succinate.

### Example 49

### Reaction of HEEU with Dimethyl Succinate

A mixture of 106.3 g dimethyl succinate (0.738 mole), 118.25 g HEEU (0.910 mole), and 1.12 g zinc acetate dihydrate was heated at 155°C. with stirring. Methanol formed from the reaction was distilled off. After five hours 21.6 g of methanol was collected (74.2% yield). The reaction mixture was cooled to 110°C., and the residual methanol in the mixture was stripped off under reduced pressure (90 mmHg; 15 minutes). The product, an oil, weighed 201.9 g.
H¹NMR (DMSO-d₆): 6.4(s), 6.3(s), 4.7(bs), 4.0-4.2(t), 3.0-3.6(m), 2.6(s).

### Example 50

### Reaction of AEEU with Dimethyl Succinate

A mixture of 19.48 g dimethyl succinate (0.13 mole), 34.40 g AEEU (0.27 mole), and 0.29 g zinc acetate dihydrate was heated at 125°C. Methanol formed from the reaction was distilled off. After four hours 6.31 g of methanol was collected (71.0% yield). The reaction mixture solidified at room temperature, and it weighed 47.20 g. NMR analysis indicated the presence of mono, di-(β-thyleneureido)ethyl)succinate plus oligomers and isomers.
H¹NMR (DMSO-d₆): 7.8-8.0(m), 6.3(s), 3.0-3.6(m), 2.6(s), 2.3(s).

### Example 51

### Reaction of Dimethyl Terephthalate with HEEU

A mixture of 37.7 g dimethyl terephthalate (0.194 mole) and 50.50 g HEEU (0.388 mole) was heated to 140°C., and a clear solution was obtained. To this solution was added 0.88 g TPT, and the reaction mixture was heated at 155°C. with stirring. Methanol formed from the reaction was distilled off, and after 5 hours 5.6 g methanol was collected (45% yield). The reaction mixture solidified to a white solid at room temperature.
H¹NMR(DMSO-d₆): 8.1(s), 6.4(s), 6.3(s), 4.7(bs), 4.4(t), 3.9(s), 3.0-3.5(m).

### Examples 52-67

These examples illustrate the utility of various compounds as post-add wet adhesion additives.

### TEST PROCEDURE

Various compounds were evaluated for wet adhesion performance as post-adds to an all acrylic latex (see Table I below). The concentration of the test substance in the latex ranged from 0.25 to one weight percent based on latex solids. The resulting latexes were formulated into an exterior semi-gloss paint (see Tables II and III) and evaluated for wet adhesion performance using a modified version of the scrub resistance test described in the ASTM procedure #D2486. The physical properties and wet adhesion performance (after four hrs. and 24 hrs. drying of paint film) of the latexes with and without various additives in accordance with the present invention are shown in Table IV.

### A. Latex Preparation

The following procedure was used In the synthesis of an all-acrylic latex.

A one-liter glass jacketed resin reactor with a bottom discharge valve is used. The reactor is equipped with thermometer, a circulating constant temperature heating bath, N₂ purge, a Teflon turbin agitator, a monomer emulsion feed pump calibrated for 4.59 grams/min and an initiator feed pump calibrated for 0.5 g/min.

**Table I**

| **All-Acrylic Latex Preparation** | |
|---|---|
| The following charge is used: | |

| **Reactor Charge** | **Wt.(g)** |
|---|---|
| D.I. Water | 192.1 |

| **Monomer Emulsion** | |
|---|---|
| D.I. Water | 182.6 |
| Rhodacal® DS4 (Surfactant) | 21.7 |
| Methylmethacrylate | 260.0 |
| Butylacrylate | 230.0 |
| Methacrylic acid | 2.7 |

| **Initiator Solution** | |
|---|---|
| Ammonium Persulfate* | 2.0 |
| D.I. Water | 98.0 |

| | |
|---|---|
| *23% solution in water; product of Rhône-Poulenc Co. | |

### The Emulsion is Prepared as Follows:

1. Dissolve the surfactant in water.
2. Blend all the monomers together.
3. Finally, mix the monomers with the water surfactant solution and keep the mixture agitated to insure a homogeneous dispersion.

### B. Polymerization Procedure

1. Heat the reactor water to 80°C while the system is under a N₂ blanket.
2. At 80°C add 25 grams of initiator solution and 14.2 grams of monomer emulsion. Hold at ∼80°C for 15 minutes.
3. Feed the remainder of the monomer emulsion and initiator solutions over a 2.5 hour period using the appropriate calibrated pumps. Maintain a polymerization temperature of 80 ± 1°C.
4. After completion of the monomer and initiator addition, heat to 85°C for 30 minutes.
5. Cool the emulsion to 23°-25°C and adjust the pH to 9.0 ± 0.2 with 28% NH₄OH. Filter the emulsion through a cheesecloth paint filter. The yield should be ∼955 grams, a viscosity of 20-28 cps and solids of ∼47.2%.
6. The WAC (wet-adhesion compound) is added to the formed polymer latex in amounts set forth in Table II, below and tested.

**TABLE II**

| Ingredients Used in Paint Formulation* | |
|---|---|
| **Paint** | **Wt.** |
| Water | 166.6 |
| Polyphobe 102 | 8.8 |
| Amp 95 | 3.0 |
| Nuosept 95 | 2.3 |
| Propylene glycol | 60.5 |
| Colloid 286 | 7.4 |
| Colloid 653 | 1.9 |
| Triton N-57 | 2.1 |
| Tronox CR-828 | 250.0 |
| Attagel 50 | 2.0 |
| Grind | |
| Water | 73.7 |
| Polyphobe 102 | 13.2 |
| Water | 12.5 |
| Latex | 420.8 |
| UCAR Filmer IBT | 10.5 |
| Colloid 653 | 2.8 |
| Polyphase AF-1 | 7.3 |
| Triton GR-7M | 1.1 |
| | **1052.5** |
| **Totals** | |

| | |
|---|---|
| *The ingredients are added in the order listed to a high speed paint disperser. | |

**TABLE III**

| **EXTERIOR TRIM HOUSE PAINT FORMULATION** | |
|---|---|
| **PAINT** | **DESCRIPTION** |
| Add in order to high speed disperser | |
| Water | |
| Polyphobe 102 | Rheology Modifier |
| Amp 95 | Amine, 2-Amino-2-Methyl Propanol |
| Nuosept 95 | In can preservative, bicyclic oxazolidines |
| Propylene Glycol | Open Time |
| Colloid 280 | Dispersant, Ammonium Polyacrylic Copolymer Solution |
| Colloid 653 | Defoamer, Hydrophobic Silica Defoamer |
| Triton N-67 | Nonionic Surfactant |
| Tronox CR-828 | Titanium Dioxide |
| Attagel 50 | Attapulgite Clay |
| Grind 20 minutes | |
| Add the following in order | |
| Water | |
| Polyphobe 102 | Rheology Modifier |
| Water | |
| Latex | |
| UCAR Filmer IBT | Coalescent Solvent, Ester Alcohol |
| Colloid 653 | Defoamer, Hydrophobic Silica Defoamer |
| Polyphase AF-1 | Mildewcide, 3 Iodo-2Propynyl Butyl Carbamate |
| Triton GR-7M | Anionic Surfactant, Dioctyl Sodium Sulfosuccinate |

**TABLE IV**

| **Wet Adhesion Scrub Tests** **Properties and Wet Adhesion Performance of Latex Containing Wet-Adhesion Promoting Additives** | | | | | | | |
|---|---|---|---|---|---|---|---|
| **Example** | **Additive of Example No.** | **% Add. in Latex** | **pH** | **Visc. cps** | **% Solids** | **Percent Film Retained After 1,000 Scrub Cycles** | |
| | | | | | | **After 4 hr. Drying** | **After 24 hr. Drying** |
| 52(c) | - | 0 | - | - | - | 0% | 0% |
| 53 | 28A | 1.0 | 7.62 | 26.0 | 46.0 | 0% | 100% |
| 54 | 28A | 0.5 | 8.11 | 25.4 | 45.8 | 0% | 60% |
| 55 | 28A | 0.25 | 8.40 | 25.8 | 46.4 | 0% | 80% |
| 56 | 28B | 1.0 | 7.40 | 24.0 | 46.6 | 0% | 100% |
| 57 | 28B | 0.5 | 7.88 | 24.5 | 46.2 | 0% | 70% |
| 58 | 28B | 0.25 | 8.30 | 26.8 | 46.7 | 0% | 75% |
| 59 | 28C | 1.0 | 7.60 | 24.0 | 46.1 | 0% | 100% |
| 60 | 28C | 0.5 | 8.01 | 24.2 | 46.3 | 0% | 100% |
| 61 | 28C | 0.25 | 8.31 | 24.9 | 46.7 | 0% | 60% |
| 62 | 45 | 1.0 | 8.72 | 31.4 | 51.1 | 0% | 100% |
| 63 | 46 | 1.0 | 8.87 | 19.7 | 48.3 | 0% | 85% |
| 64 | 47 | 1.0 | 8.88 | 23.2 | 49.6 | 0% | 85% |

| | | | | | | | |
|---|---|---|---|---|---|---|---|
| (c) = comparative | | | | | | | |

### Example 65

Following the test procedure of Example 29, if C8 is used in place of M28 and tested in accordance therewith, substantially equivalent results are obtainable.

### Example 66

Following the test procedure of Example 53, if C11 is used in place of C28A, and tested in accordance therewith, substantially equivalent results are obtainable.

### Example 67

Following the test procedure of Example 53, if C14 is used in place of C28A, and tested in accordance therewith, substantially equivalent results are obtainable.

### Example 68

Following the test procedure of Example 53, if C5 is used in place of C28A, and tested in accordance therewith, substantially equivalent results are obtainable.

### Example 69

Following the test procedure of Example 53, if C9 is used in place of C28A, and tested in accordance therewith, substantially equivalent results are obtainable.

### Example 70

Following the test procedure of Example 53, if C12 is used in place of C28A, and tested in accordance therewith, substantially equivalent results are obtainable.

### Example 71

Following the test procedure of Example 53, if C13 is used in place of C28A, and tested in accordance therewith, substantially equivalent results are obtainable.

### Example 72

Following the test procedure of Example 53, if C15 is used in place of C28A, and tested in accordance therewith, substantially equivalent results are obtainable.

### Example 73

Following the test procedure of Example 53, if C23 is used in place of C28A, and tested in accordance therewith, substantially equivalent results are obtainable.

### Example 74

Following the test procedure of Example 53, if C25 is used in place of C28A, and tested in accordance therewith, substantially equivalent results are obtainable.

### Example 75

Following the test procedure of Example 53, if C27 is used in place of C28A, and tested in accordance therewtih, substantially equivalent results are obtainable.

### Example 76

Following the test procedure of Example 53, if C46 is used in place of C28A, and tested in accordance therewith, substantially equivalent results are obtainable.

### Example 77

Following the test procedure of Example 53, if C34 is used in place of C28A, and tested in accordance therewith, substantially equivalent results are obtainable.

## Claims

1. A latex composition capable of conferring wet adhesion comprising a blend of a) a latex polymer and b) a compound represented by the Formula (I) 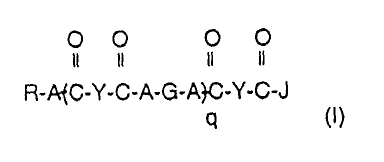 wherein A is 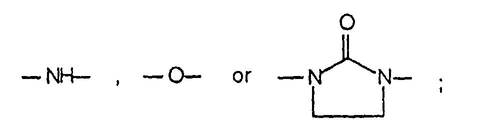 wherein G is an aliphatic or alicyclic moiety of 1-12 carbon atoms, inclusive, or an alkylene or polyalkylene oxide moiety of 2-6 carbon atoms, inclusive,
wherein Y is a C₁-C₁₂, inclusive, aliphatic or alicyclic moiety, a C₆-C₁₅ aromatic, alkylaromatic, hydroaromatic or haloaromatic moiety, 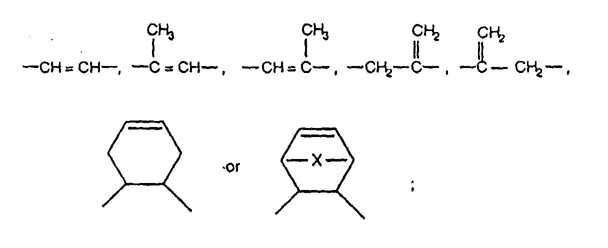 wherein X is ― CH₂ ― or ― O ― ; wherein R is 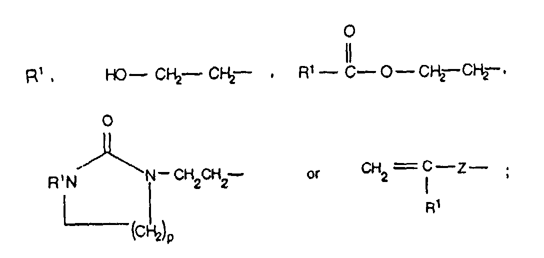 wherein Z is CH₂, 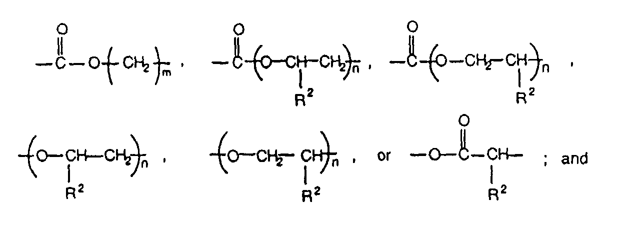 wherein J is NHCONHR² , 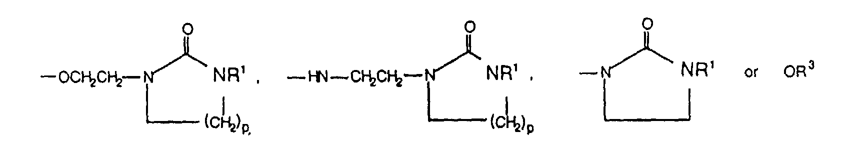 wherein R¹ , R ² or R³ is, individually, hydrogen or a C₁-C₄ alkyl, n is an integer of from 1 to 5, inclusive, p is 1 or 2, m is ≥ 2, and q is an integer of from 0 to 15, inclusive.

2. The latex paint composition of claim 1, wherein the latex is comprised of an ethylenically unsaturated monomer is selected from the group consisting of acrylic and methacrylic acids and their alkyl esters with alcohols having from 1 to 12 carbon atoms, vinyl esters of linear and branched carboxylic acids having from 1 to 25 carbon atoms, acrylonitrile, acrylamide, methacrylamide, styrene, α-methyl styrene, halogenated styrene and alkyl substituted derivatives of styrene, α-methyl styrene, halogenated styrene where the alkyl substituents have from 1 to 4 carbon atoms.

3. The latex composition of claim 1, wherein (b) is

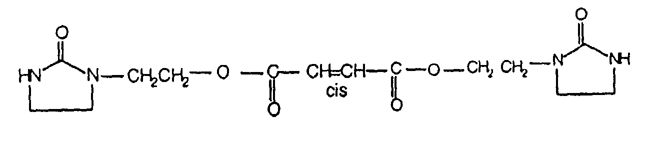

4. The latex composition of claim 2, wherein (b) is

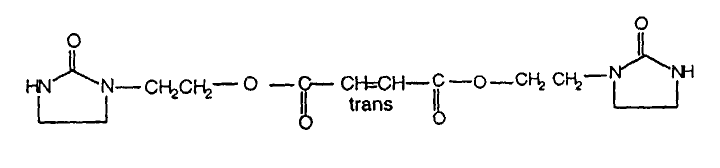

5. The latex composition of claim 2, wherein (b) is

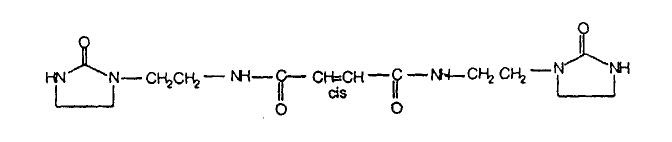

6. The latex composition of claim 2, wherein (b) is

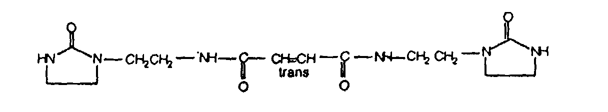

7. The latex composition of claim 2, wherein (b) is a mixture of 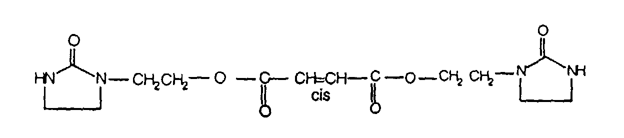 and

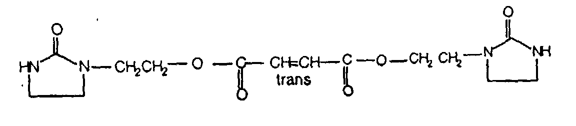

8. The latex composition of Claim 2, wherein (b) is the reaction product of dimethyl maleate and hydroxyethylethyleneurea.

9. The latex composition of Claim 2, wherein (b) is the reaction product of dimethyl maleate, dimethyl fumarate and hydroxyethylethyleneurea.

10. The latex commposition of Claim 2, wherein (b) is the reaction product of dimethyl succinate and hydroxyethylethyleneurea.

11. The latex composition of Claim 2, wherein (b) is the reaction product of dimethyl succinate and amino ethylethyleneurea.

12. The latex composition of Claim 2, wherein (b) is the reaction product of dimethyl adipate and hydroxyethylethyleneurea.

13. The latex composition of Claim 2 wherein (b) is the reaction product of dimethyl terphthalate and hydroxyethylethyleneurea.

14. The latex composition of Claim 2 wherein (b) is the reaction product of dimethyl succinate and ethylene glycol followed by hydroxyethylethyleneurea.

15. A process of preparing the composition of Claim 1 which comprises adding to a latex polymer a compound represented by the formula (I) 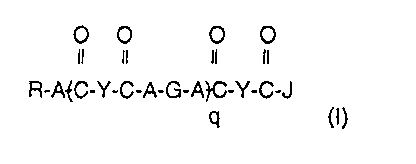 wherein A is 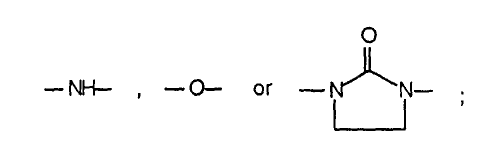 wherein G is an aliphatic or alicyclic moiety of 1-12 carbon atoms, inclusive, or an alkylene or polyalkylene oxide moiety of 2-6 carbon atoms, inclusive,
wherein Y is a C₁-C₁₂, inclusive, aliphatic or alicyclic moiety, a C₆-C₁₅ aromatic, alkylaromatic, hydroaromatic or haloaromatic moiety, 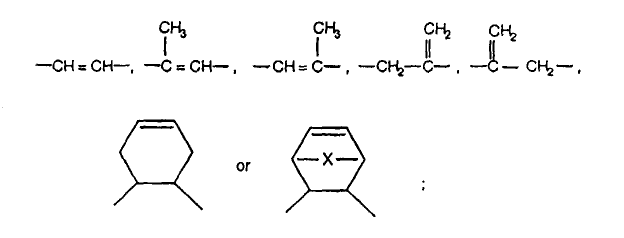 wherein X is ― CH₂ ― or ― O ― ; wherein R is 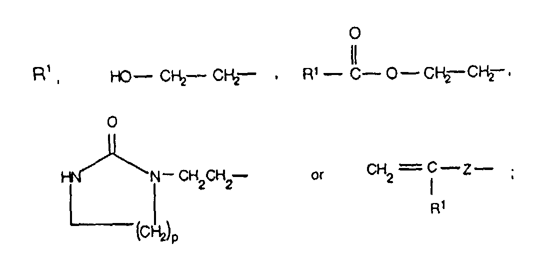 wherein Z is CH₂, 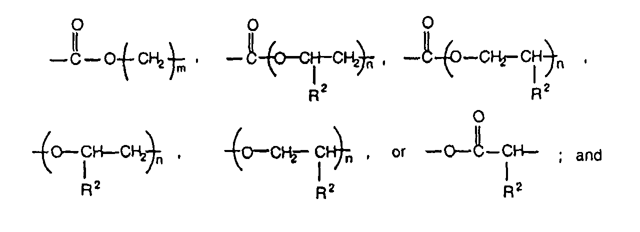 wherein J is NHCONHR², 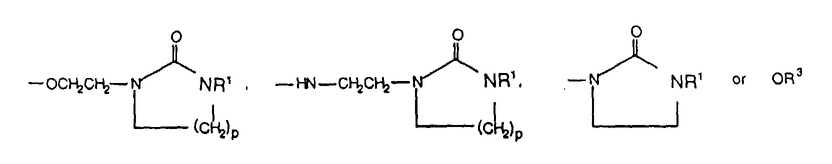 wherein R¹, R² or R³ is, individually, hydrogen or a C₁-C₄ alkyl, n is an integer of from 1 to 5, inclusive, p is 1 or 2, m is ≥ 2, and q is an integer of from 0 to 15, inclusive.

16. The process of claim 15, wherein A is ―O―, Y is ―CH=CH― J is NHCONHR² and R is

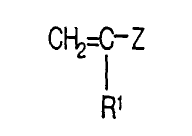

17. The process of claim 16, wherein Z is

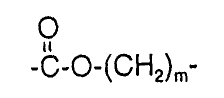

18. The process of claim 16, wherein R¹ is CH₃ and R² is hydrogen.

19. The process of claim 17, wherein m is 2.

20. The process of claim 16, wherein A is -O-,Y is CH=CH, J is

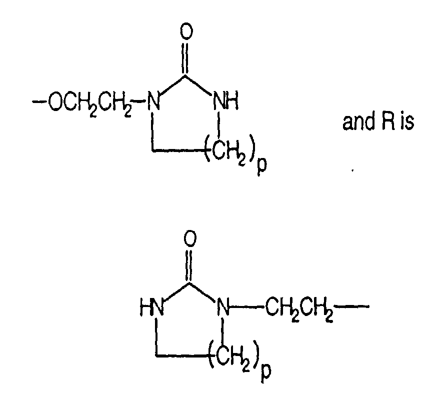

21. The process of claim 20, wherein p is 1.

22. A composition of Claim 1 wherein said latex polymer is the reaction product of monomers containing at least one ethylenically unsaturated group.

23. A process according to Claim 15 wherein said latex polymer is the reaction product of monomers containing at least one ethylenically unsaturated group.

24. A compound having the formula (1) 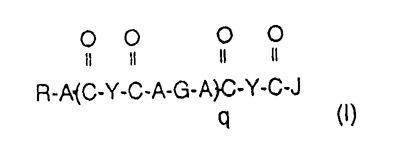 wherein A is 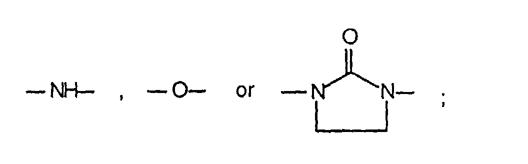 wherein G is an aliphatic or alicyclic moiety of 1-12 carbon atoms, inclusive, or an alkylene or polyalkylene oxide moiety of 2-6 carbon atoms, inclusive,
wherein Y is a C₁-C₁₂, inclusive, aliphatic or alicyclic moiety, a C₆-C₁₅ aromatic, alkylaromatic, hydroaromatic or haloaromatic moiety, 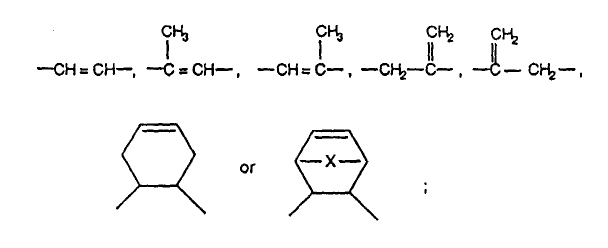 wherein X is ― CH₂ ― or ― O ― ;
wherein R is 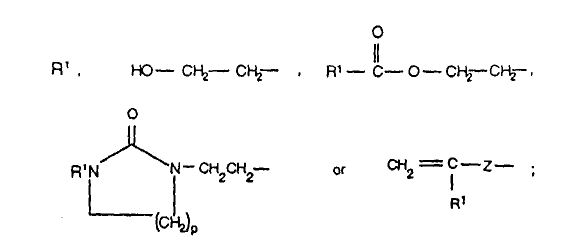 wherein Z is CH₂, 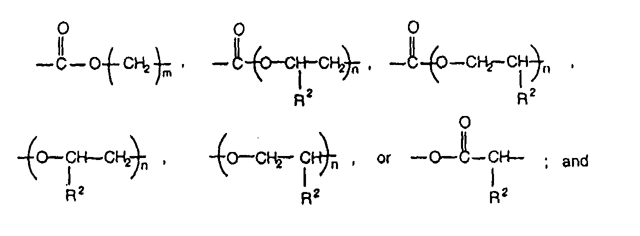 wherein J is NHCONHR², 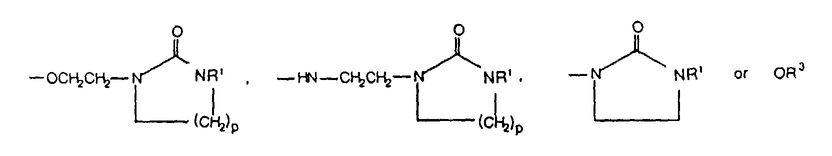 wherein R¹, R² or R³ is, individually, hydrogen or a C₁-C₄ alkyl, n is an integer of from 1 to 5, inclusive, p is 1 or 2, m is ≥ 2, and q is an integer of 1-15, inclusive.

25. A method of providing a composition capable of improving the wet adhesion of a paint formulation which comprises adding thereto a compound represented by Formula (1) 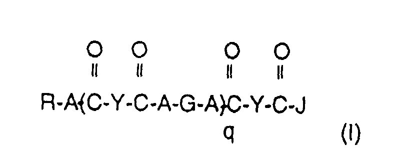 wherein A is 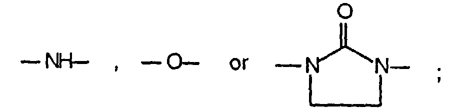 wherein G is an aliphatic or alicyclic moiety of 1-12 carbon atoms, inclusive, or an alkylene or polyalkylene oxide moiety of 2-6 carbon atoms, inclusive,
wherein Y is a C₁-C₁₂, inclusive, aliphatic or alicyclic moiety, a C₆-C₁₅ aromatic, alkylaromatic, hydroaromatic or haloaromatic moiety, 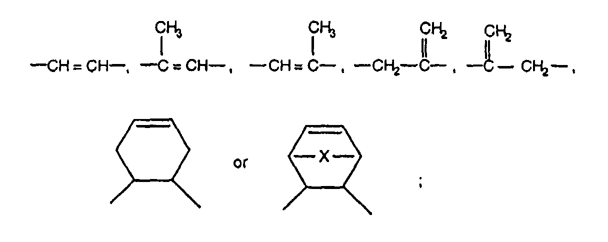 wherein X is ― CH₂ ― or ― O ― ;
wherein R is 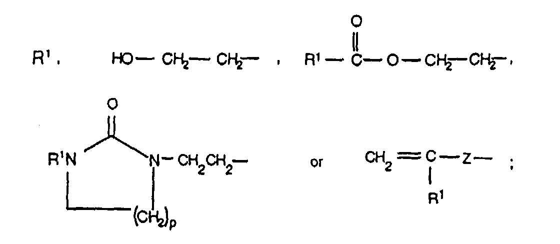 wherein Z is CH₂, 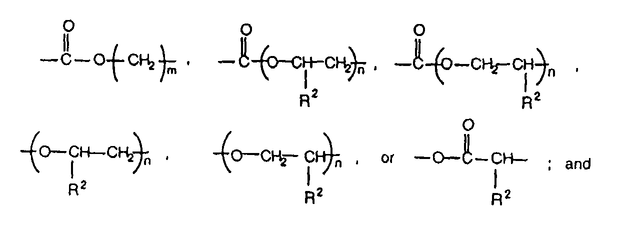 wherein J is NHCONHR², 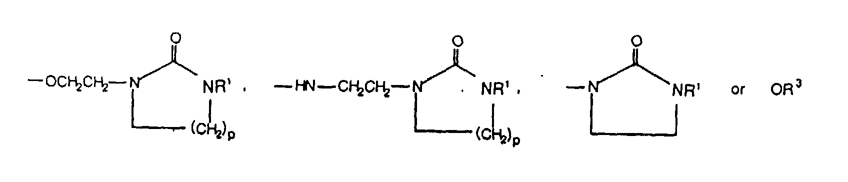 wherein R¹, R² or R³ is, individually, hydrogen or a C₁-C₄ alkyl, n is an integer of from 1 to 5, inclusive, p is 1 or 2, m is ≥ 2, and q is an integer of from 0 to 15, inclusive.
